# EUROPEAN PATENT SPECIFICATION

(11) **EP 0 614 056 B1**
(45) Date of publication and mention of the grant of the patent: **24.09.1997**
(21) Application number: 94301305.2
(22) Date of filing: 24.02.1994
(51) Int. Cl.: F24F 13/075

(54) **Air-direction adjusting apparatus in air-conditioning equipment**
Luftströmungsrichtung-Steuergerät für Klimageräte
Dispositif d'ajustement de la direction de soufflage d'air pour appareils de conditionnement

(30) Priority: 05.03.1993 JP 45142/93; 24.08.1993 JP 209419/93
(43) Date of publication of application: 07.09.1994
(60) Divisional application: 97100232.4
(73) Proprietor: MITSUBISHI DENKI KABUSHIKI KAISHA, Tokyo 100 (JP)
(72) Inventor: Kotoh, Satoru, c/o Mitsubishi Denki K.K., Amagasaki-shi, Hyogo 661 (JP); Sakuma, Kiyoshi, c/o Mitsubishi Denki K.K., Shizuoka-shi, Shizuoka 422 (JP); Yoshida, Takayuki, c/o Mitsubishi Denki K.K., Shizuoka-shi, Shizuoka 422 (JP); Sano, Hiromi, c/o Mitsubishi Denki K.K., Shizuoka-shi, Shizuoka 422 (JP); Aoki, Katuyuki, c/o Mitsubishi Denki K.K., Shizuoka-shi, Shizuoka 422 (JP); Suzuki, Shin'ichi, c/o Mitsubishi Denki K.K., Shizuoka-shi, Shizuoka 422 (JP); Koizumi, Hideaki, c/o Mitsubishi Elec. Eng. Co.Ltd, 3-chome, Shizuoka-shi, Shizuoka 422 (JP); Yamamoto, Kaoru, c/o Mitsubishi Elec. Eng. Co.Ltd, 3-chome, Shizuoka-shi, Shizuoka 422 (JP); Matsushita, Kunio, c/o Mitsubishi Elec. Eng.Co.Ltd, 3-chome, Shizuoka-shi, Shizuoka 422 (JP); Unno, Kenichi, c/o Mitsubishi Elec. Eng. Co. Ltd., 3-chome, Shizuoka-shi, Shizuoka 422 (JP); Oguma, Tomoko, c/o Mitsubishi Denki K.K., Shizuoka-shi, Shizuoka 422 (JP)
(74) Representative: Mounteney, Simon James

(56) References cited:
- PATENT ABSTRACTS OF JAPAN vol. 13, no. 462 (M-881) 19 October 1989 & JP-A-01 181 035 (MATSUSHITA REFRIG CO) 19 July 1989

## Description

### BACKGROUND OF THE INVENTION

### a) Field of the Invention

The present invention relates to an air-direction adjusting apparatus in an air-conditioning equipment, which is disposed at a blow-outlet thereof.

### b) Description of Related Art

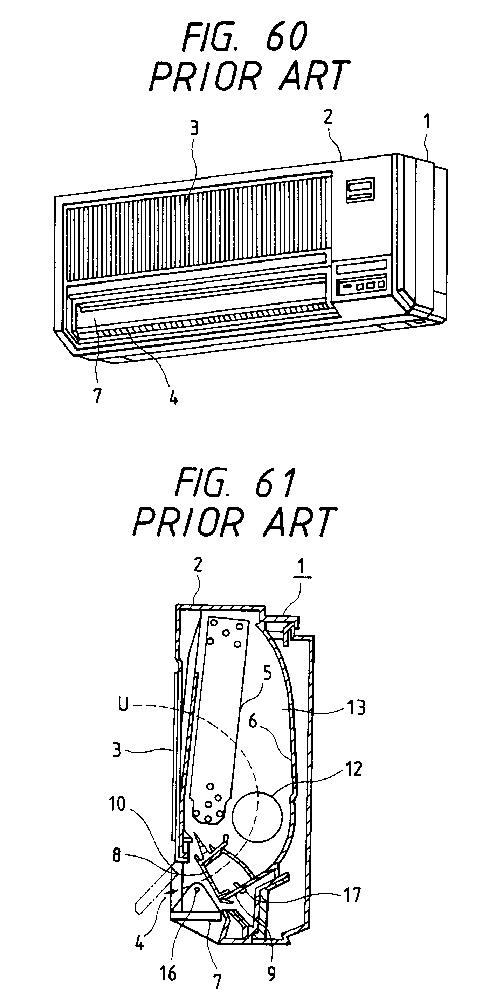

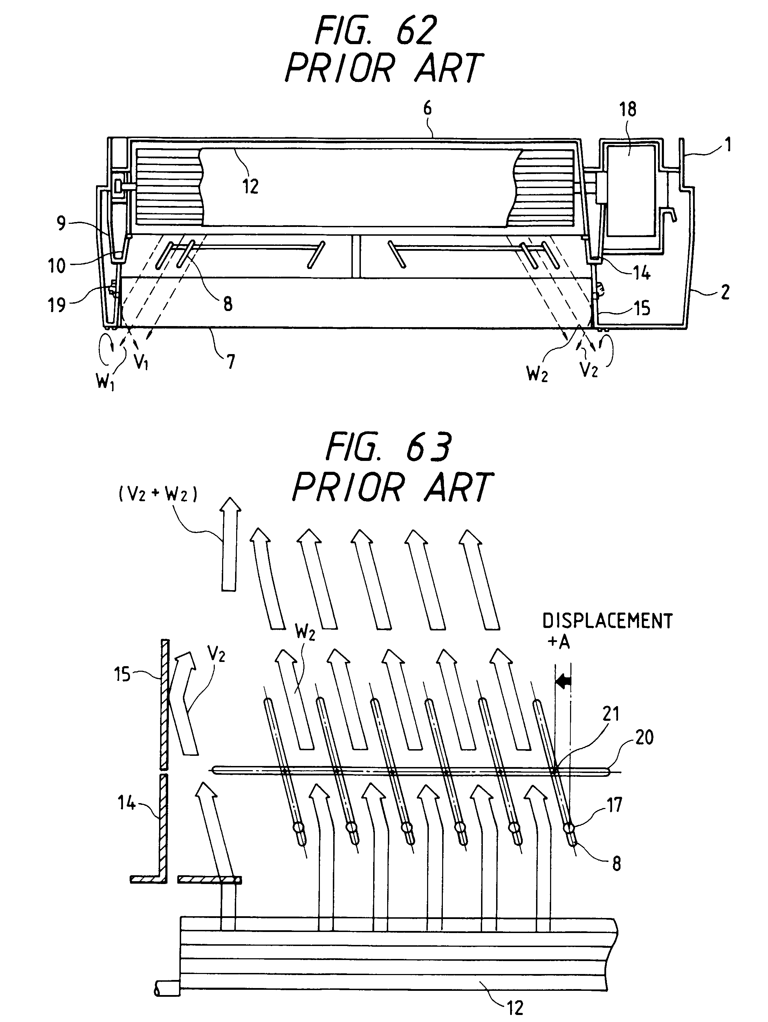

Figs. 60 to 62 are views showing an air-direction adjusting apparatus in a conventional air-conditioning equipment as disclosed in Japanese Utility Model Unexamined Publication No. Sho-58-69735. Fig. 60 is a perspective view of a body of the air-conditioning equipment; Fig. 61 is a cross section of Fig. 60; and Fig. 62 is a vertical section of Fig. 60.

In the drawings, the reference numeral 1 represents a body of an air-conditioning equipment; 2, a front panel having a suction inlet 3 and for covering the front surface of the body 1; 4, a blow-outlet having an opening at a front lower portion of the body 1; 5, a heat exchanger disposed so as to face the suction inlet 3; 6, a casing provided in the inside of the body 1 and for forming an air course 13; 7, a change vane provided at the blow-outlet 4 so as to be pivotally mounted to left and right side walls 11 and 15 of the front panel 2 by a shaft 16 mounted to left and right end portions of the blow-outlet 4 and for changing the air direction to the horizontal direction, the perpendicularly falling direction or an oblique direction; 8, a plurality of parallel guide vanes provided between walls 10 and 14 at left and right side portions of a blow-out nozzle 9 so as to be pivotally held by a pivotal shaft 17 and for changing the air direction to the left-rightwise direction; 9, a blow-out nozzle disposed under the casing 6 and cooperating with the casing 6 to form an air course; 12, a fan disposed on the air course 13 at the blow-out 4 and driven by the motor 18; and 19, coiled springs suspended from the shaft 16.

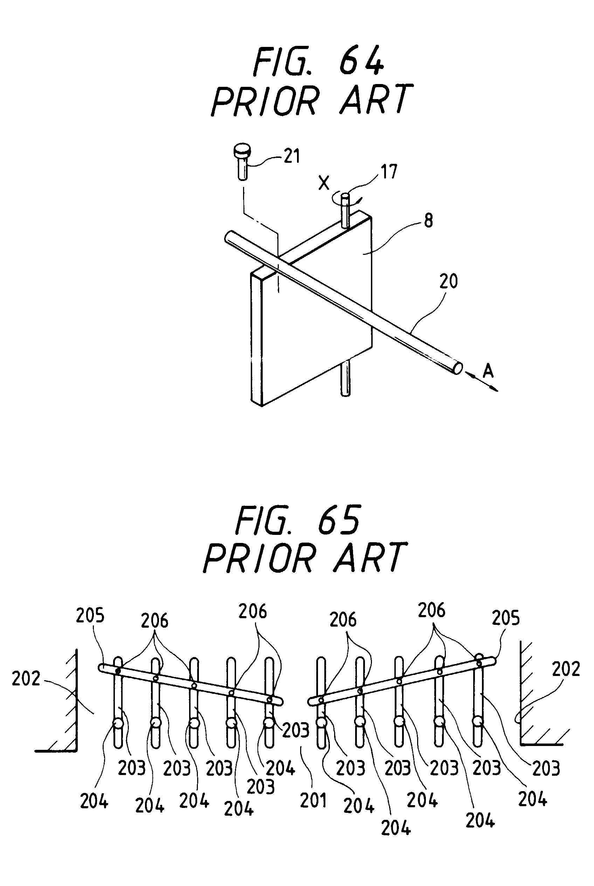

Fig. 63 is a detailed view for explaining the neighbor of the right-side guide vanes depicted in Fig. 62; and Fig. 64 is a perspective view of one of the guide vanes depicted in Fig. 63.

In the drawings, the reference numeral 20 represents a left/right changing rod pivotally mounted to the plurality of guide vanes 8 by shafts 21 and for changing the angles of the guide vanes 8 to a left-rightwise arbitrary value simultaneously.

The operation of the apparatus will be described below. When the fan 12 is driven in the conventional air-conditioning equipment constructed as described above, air is sucked from the room through the suction inlet 3, passes through the heat exchanger 5 so as to be cooled in an air-cooling mode or heated in an air-heating mode, falls down in the air course 13 and then is blown out to the room through the blow-outlet 4. This flow of air is represented by the arrow U. The up/down air direction and the left/right air direction of the air are adjusted by the change vane 7 and the guide vanes 8, respectively. Because the shafts 21 for pivotally holding the guide vanes 8 and the left/right changing rod 20 and the shafts 17 for pivotally holding the guide vanes 8 are fixed to each other at intervals of a predetermined distance, all of the guide vanes 8 are controlled to be turned to the same direction on the basis of the displacement quantity +A given to the left/right changing rod 20.

Here, the change vane 7 and the guide vanes 8 cannot be exposed to the outside of the front panel 2 from restriction on design. It is further necessary to arrange the change vane 7 at the outermost portion of the blow-outlet because the change vane 7 must serve also as a cover for blocking the blow-outlet. Accordingly, the guide vanes 8 cannot but be arranged further back from the blow-outlet than the change vane 7. In this occasion, the operation of the air-direction adjusting apparatus is as follows. When, for example, the left/right changing rod 20 is moved to the right by a displacement quantity +A as shown in Fig. 63 to turn the guide vanes 8 to thereby blow out air in the right direction, air is reflected on the wall surface 14 at the right side portion of the rightmost nozzle 9 and the right wall surface 15 of the front panel 2 or deflected to a forward straight air current before the air is blown out. Here, the flow of air to the direction given by the guide vanes and the flow of air blown out after reflection on the right wall surface 15 or deflection to a forward straight air current are represented by W₂ and V₂, respectively. The flow W₂ of blown air set by the guide vanes 8 is affected by the flow V₂ of blown air after reflection on the right wall surface 15 at the rightmost end portion, so that it is deflected to the vector synthesizing direction of (V₂ + W₂). As a result, the blown air direction cannot be adjusted accurately in the conventional air- conditioning equipment because the blown air direction is deflected to the direction of the front of the air-conditioning equipment on the basis of the influence of the air flow in the synthesizing direction of (V₂ + W₂) even in the case where the blown air direction is set to be at a left-rightwise oblique angle with respect to the air-conditioning equipment.

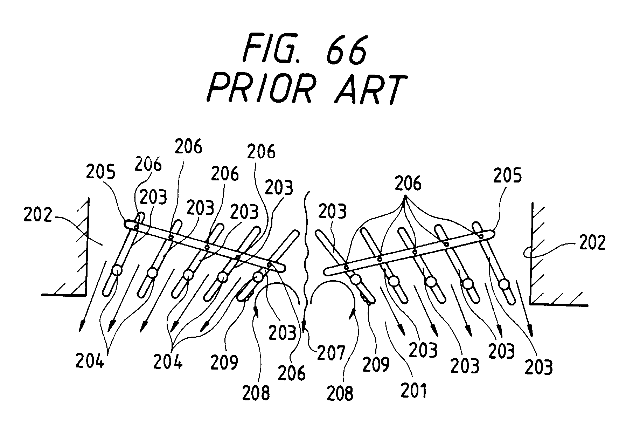

Figs. 65 and 66 are views showing another air-direction adjusting apparatus in a conventional air-conditioning equipment as disclosed in Japanese Utility Model Unexamined Publication No. Sho-63-147650. Fig. 65 is a cross section of the apparatus; and Fig. 66 is a view for explaining the operating state of the apparatus depicted in Fig. 65. In the drawings, the reference numeral 201 represents a blow-outlet; 202, an inner wall of the blow-outlet 201; and 203, a plurality of vanes disposed at substantially equal intervals and for changing the air direction. As shown in Fig. 65, the plurality of vanes 203 are divided into two groups and the respective groups each of which is composed of a plurality of vanes are provided in the left and right respectively in Fig. 65.

The reference numeral 204 represents shafts which are disposed for the vanes 203 respectively so as to be erected from the inner wall 202 and for pivotally holding the one-end side of an edge portion at one side of each of the vanes 203.

The reference numeral 205 represents connection arms each of which connects a group of vanes 203 and is provided with connection shafts 206 for pivotally holding the other-end side of the edge portion where the respective shafts 204 of the vanes 203 are disposed. As shown in Fig. 65, the connection shafts 206 are arranged in a line inclined with respect to a line connecting the respective shafts 204 of the vanes 203 so that the distance between the shaft 204 of the inner vane 203 and the connection shaft 206 in Fig. 65 is set to be shorter than the distance between the shaft 204 of the outer vane 203 and the connection shaft 206 in Fig. 65.

The other air-direction adjusting apparatus in the conventional air-conditioning equipment shown in Figs. 65 and 66 is configured as described above. As shown in Fig. 66, the air- direction adjusting apparatus is used in the condition in which two groups of vanes 203 provided in the left and right respectively are arranged with their lower portions spread out. In this condition, the inclination of the inner vane 203 in Fig. 66 is nearer to the horizontal line than the inclination of the outer vane 203 in Fig. 66. Accordingly, the respective angles of blown air deflected by the vanes 203 are formed as represented by the solid arrows in Fig. 66 so that the inclination of the inner vane 203 is nearer to the horizontal line than the inclination of the outer vane 203.

Further, a narrow gap is formed at a center portion between the two groups of vanes 203. Accordingly, air 207 blown out through this gap cannot flow smoothly, so that the air 207 is weakened. As a result, secondary air 208 in the neighborhood of the air 207 is involved, so that dew 209 is produced in the vanes 203.

Because the air-direction adjusting apparatus in the conventional air-conditioning equipment is configured as described above, blown air currents as the whole are deflected to the direction of the front of the air-conditioning equipment on the basis of the influence of reflection on the wall surfaces at the left and right side portions of the nozzle and the left and right wall surfaces of the front panel or the influence of deflection to a forward straight air current in the case where an air-conditioning air current is to be blown out in a left/right oblique direction of the air-conditioning equipment. There arises a problem that the resulting air current cannot be made to arrive accurately at the point aimed at. Particularly in the case where the blown air current is controlled by using a human body sensor so as to be adjusted to the human location aimed at, there arises a problem that air current control in a left/right oblique direction of the air-conditioning equipment cannot be performed accurately.

In the aforementioned air-direction adjusting apparatus in the conventional air-conditioning equipment, when the left/right deflection rod 20 is moved by a large displacement quantity, the pressure loss caused by the guide vanes 8 increases so that the quantity of air blown out of the blow-outlet 4 through the air course 13 is reduced extremely. As a result, particularly in an air-heating mode, heated air is blown up so that the heated air cannot reach the floor of the living room.

Because the temperature of blown air is lowered in an air- cooling mode, dew is deposited onto respective portions of the blow-outlet 4 and the body 1 to cause the dropping of dew in the living room subjected to air-conditioning or to cause the growth of mildew in the living room. Further, the resulting blown air falls down to the floor near to the air-conditioning equipment compared with the case where the air is blown in the forward direction, so that accuracy in air current direction control is lowered.

Because the air direction is limited greatly by the guide vanes 8, the air current is separated so that dew is deposited onto respective portions of the blow-outlet 4 in an air-cooling mode. Further, in the case where the air-conditioning equipment is set by the wall of the living room, the blown air current is reflected on the wall so that the blown air current is sucked into the equipment through the suction inlet 3. Accordingly, the air current cannot circulate in the living room, so that comfortable environment cannot be achieved.

In order to prevent the aforementioned disadvantage, it is necessary to limit the deflection angle of the left/right air- direction deflection plates. On the contrary, the conventional apparatus has a structure in which the deflection angle of the left/right air-direction deflection plates cannot be changed over a limited angle range. Accordingly, for example, also in an air- heating mode in which there is no dew deposition, the limitation of the deflection angle range of the left/right air-direction deflection plates in an air-cooling mode makes it impossible to blow air over the deflection angle range.

Further, the limitation of the deflection angle range of the left/right air-direction deflection plates causes the limitation of the angle of air-blowing in the direction of the absence of the wall at the time of the mounting of the air-conditioning equipment by the wall.

From the aforementioned reason, the left/right air-blowing allowable range is limited to be narrowed, so that it becomes difficult to supply blown air to the whole space of the living room. There arises a problem that unevenness of temperature occurs to thereby spoil comfortableness.

In the other air-direction adjusting apparatus in the conventional air-conditioning equipment as shown in Figs. 65 and 66, it is necessary that the respective vanes 203 are produced while the distances between the shafts 204 and the connection shafts 206 are successively changed in accordance with the positions of the arrangement of the vanes 203. There arises a problem that troublesome labor is required for the production and assembling of the vanes 203.

Further, a narrow gap is formed in an intermediate portion between two groups of vanes 203. Accordingly, air 207 blown out through this gap is weak so that secondary air 208 in the neighborhood of the air 207 is involved. There arises a problem that dew 209 is generated in the vanes 203 and falls down.

In addition, there arises a problem that the rotating operations of the vanes 203 at the pivotally mounted portions thereof are made smoothless or noise is produced at the pivotally mounted portions.

### SUMMARY OF THE INVENTION

The present invention intends to solve the aforementioned problems and a first object of the present invention is to provide an air-direction adjusting apparatus in an air- conditioning equipment in which the blown air current or flow is controlled accurately in the left/right direction so that the air current can be made to reach accurately the positions as desired.

The present invention intends to solve the aforementioned problems and a second object of the present invention is to provide an air-direction adjusting apparatus in an air- conditioning equipment in which the left/right air-blowing allowable range is widened or in which the blowing air can reach the wider area, to thereby improve comfortableness of the living room.

The present invention intends to solve the aforementioned problems and a third object of the present invention is to provide an air-direction adjusting apparatus in an air- conditioning equipment which can be produced and assembled up easily.

A fourth object of the present invention is to provide an air-direction adjusting apparatus in an air-conditioning equipment in which dropping of dew from the vanes is reduced.

A fifth object of the present invention is to provide an air-direction adjusting apparatus in an air-conditioning equipment in which not only the vanes make the rotating operations smoothly but noises at the vane portions is reduced.

The present invention provides an air-direction adjusting apparatus in an air-conditioning equipment in which a blow-out nozzle having an oblong section extending in a left/right direction is provided in the outlet of an air course formed in the inside of a body of the apparatus and in which blown air passed through the air course is blown out of the outlet while guided with respect to the left/right direction by at least one set of guide vanes pivotally mounted in the blow-out nozzle with their pivot axes parallel, the guide vanes being connected to a link which is movable in the left/right direction to incline the guide vanes, characterised by sliding connections between at least some of the guide vanes and the link to allow variation of the distance between the intersection of the said guide vanes with the link and the pivot axis of the guide vanes.

In one embodiment the guide vanes are controlled so that the angle of inclination of each guide vane becomes larger as the guide vane approaches an end of the set of guide vanes in the left/right direction.

Preferably, the distance between side walls of the apparatus body in the left/right direction is defined by smoothly curved surfaces so that the distance changes so as to become larger gradually toward the air-blowing direction.

Preferably, two driving systems respectively for swinging the guide vanes left/right and making the respective inclinations of the guide vanes different from each other in accordance with the blown air direction are used.

Alternatively the apparatus has a structure in which only one driving system for swinging the guide vanes left/right in accordance with the blown air direction is used for guide vane control, the distances between the pivots and the connection points being made different from each other.

The leftmost/rightmost one of the guide vanes and a left/right side wall of the apparatus body may be connected to each other through a bellows-like bulkhead without any disturbance of motion of the guide vanes to thereby block a space between the vane and the side wall of the apparatus body.

Alternatively, a space between a leftmost/rightmost one of the guide vanes and a left/right side wall of the apparatus body is filled with a sponge-like member so that the space between the vane and the side wall of the apparatus body is blocked.

In each of the above-mentioned air-direction adjusting apparatuses, preferably, two (left and right) systems are provided for guide van control to thereby make the inclinations of the guide vanes different from each other between the systems.

A sensor for detecting the location of an object or a human body may be used so that the direction of blowing of an air-conditioning air current is controlled to be changed toward the location of the human body automatically in accordance with an output of the sensor to thereby make the air-conditioning air current arrive at the location concentratedly.

The air-direction adjusting apparatus may have a structure in which a sensor for detecting the location of objects or human bodies is used so that when objects or human bodies are at scattered locations, the directions of blowing of air-conditioning air currents in two systems are controlled automatically so that the air-conditioning air currents are blown out so as to be diffused to a range of the location of the objects or human bodies.

The air-direction adjusting apparatus may have a structure in which all of the guide vanes are controlled so that the angle of inclination of each guide vane becomes smaller as the guide vane approaches an end of the set of guide vanes in the left/right direction.

The air-direction adjusting apparatus in an air-conditioning equipment in another embodiment according to the present invention is provided with: a first-kind vane disposed at a blow- outlet and provided with a pivotal bearing provided on the one- end side of an edge portion on its one side and a rotational bearing provided on the other-end side opposite to the one-end side, the first-kind vane being pivotally mounted onto an inner wall of the blow-outlet through the pivotal bearing and making rotational movement to thereby change the air direction; second-kind vane formed in the same manner as the first-kind vane and disposed at the blow-outlet so as to be far from the first- kind vane, the second-kind vane being provided with a pivotal bearing provided in a position corresponding to the pivotal bearing of the first-kind vane and a rotational bearing provided in a position corresponding to the rotational bearing of the first-kind vane so that the second-kind vane is disposed in a shorter distance than the distance between the pivotal and rotational bearings of the first-kind vane, the second-kind vane making rotational movement in the same manner as the first-kind vane to thereby change the air direction; a plurality of third- kind vanes formed in the same manner as the first-kind vane and disposed at the blow-outlet so as to be provided separately between the first-kind vane and the second-kind vane, the third- kind vanes being provided with pivotal bearings provided in positions corresponding to the pivotal bearing of the first-kind vane, each of the third-kind vanes being provided with an engagement portion formed in an edge portion where the pivotal bearing is disposed and having an elongated hole along the length of the edge portion, the third-kind vanes making rotational movement in the same manner as the first-kind vane to thereby change the air direction; and a connection arm having connection shafts provided at its opposite end portions so as to be pivotally held by the rotational bearings of the first- and second-kind vanes respectively, and intermediate connection shafts provided at its intermediate portion so as to be movably fitted into the elongated holes of the engagement portions of the third-kind vanes respectively.

The air-direction adjusting apparatus in an air-conditioning equipment in another embodiment according to the present invention is provided with: a first-kind vane disposed at a blow- outlet and provided with a pivotal bearing provided on the one- end side of an edge portion on its one side and a rotational bearing provided on the other-end side opposite to the one-end side, the first-kind vane being pivotally mounted onto an inner wall of the blow-outlet through the pivotal bearing and making rotational movement to thereby change the air direction; a second-kind vane formed in the same manner as the first-kind vane and disposed at the blow-outlet so as to be far from the first- kind vane, the second-kind vane being provided with a pivotal bearing provided in a position corresponding to the pivotal bearing of the first-kind vane and a rotational bearing provided in a position corresponding to the rotational bearing of the first-kind vane so that the second-kind vane is disposed in a shorter distance than the distance between the pivotal and rotational bearings of the first-kind vane, the second-kind vane making rotational movement in the same manner as the first-kind vane to thereby change the air direction; a plurality of third- kind vanes formed in the same manner as the first-kind vane and disposed at the blow-outlet so as to be provided separately between the first-kind vane and the second-kind vane, the third- kind vanes being provided with pivotal bearings provided in positions corresponding to the pivotal bearing of the first-kind vane, each of the third-kind vanes being provided with an engagement portion formed in an edge portion where the pivotal bearing is disposed and having an elongated hole along the length of the edge portion, and a bearing portion formed so as to be provided in a just above portion of the elongated hole, the third-kind vanes making rotational movement in the same manner as the first-kind vane to thereby change the air direction; and a connection arm having connection shafts provided at its opposite end portions so as to be pivotally held by the rotational bearings of the first- and second-kind vanes respectively, intermediate connection shafts provided at its intermediate portion so as to be movably fitted into the elongated holes of the engagement portions of the third-kind vanes respectively, and an intermediate joint shaft disposed in an intermediate portion of the intermediate connection shafts so as to be pivotally held by the bearing portion of the third-kind vanes.

The air-direction adjusting apparatus in an air-conditioning equipment in another embodiment according to the present invention is provided with: two groups of vanes which are disposed respectively in the left and right of a blow-outlet so that the two groups of vanes make rotational movement in opposite directions to thereby change the air direction and form a narrow space between the two, left and right groups of vanes, each of the vanes being provided with a plurality of dew-receiving cavities formed in its surface.

The air-direction adjusting apparatus in an air-conditioning equipment in another embodiment according to the present invention is provided with: vanes disposed at a blow-outlet and making rotational movement to thereby change the air direction; pivotal bearings each of which is provided in an edge portion on one side of each of the vanes to form a C-shape which is such that an annular side thereof is cut off; sleeves fitted to the pivotal bearings so as to be held by the pivotal bearings respectively; and shafts provided so as to erected from an inner wall of the blow-outlet and inserted into the sleeves respectively, the shafts being provided with claws which are provided at upper ends of the shafts so as to project from the shafts and are engaged with upper edges of the sleeves, respectively.

Fig. 1 is a detailed explanatory view in the vicinity of the right-side guide vanes according to Embodiment 1 of the present invention.

Fig. 2 is a detailed explanatory view in the vicinity of the right-side guide vanes when the vanes according to Embodiment 1 of the present invention are inclined rightward.

Figs. 3(a) and 3(b) are perspective views, each for explaining the operation of the driving system according to Embodiment 1 of the present invention.

Fig. 4 is a perspective view illustrating an mechanism of connection between the guide vane and left/right changing rod according to Embodiment 1 of the present invention.

Fig. 5 is a perspective view illustrating another mechanism of connection between the guide vane and left/right changing rod according to Embodiment 1 of the present invention.

Fig. 6 is an explanatory view illustrating another mechanism for moving the left/right changing rod while making the rod touch on the circumference of the left-side or right-side cam according to Embodiment 1 of the present invention.

Fig. 7 is an explanatory view illustrating a further mechanism for moving the left/right changing rod while making the rod touch on the circumference of the left-side or right-side cam according to Embodiment 1 of the present invention.

Fig. 8 is an explanatory view for explaining the control when the guide vane control system is divided into two systems according to Embodiment 1 of the present invention.

Fig. 9 is an explanatory view illustrating another example of the side wall according to Embodiment 1 of the present invention.

Figs. 10 to 14 are omitted.

Fig. 15 is a detailed explanatory view in the vicinity of the right-side guide vanes in one embodiment.

Fig. 16 is a detailed explanatory view in the vicinity of the right-side guide vanes in another embodiment.

Fig. 17 is a flowchart for explaining the control operation of the air-direction adjusting apparatus.

Fig. 18 is a detailed explanatory view in the vicinity of the right-side guide vanes according to Embodiment 2 of the present invention.

Fig. 19 is a detailed explanatory view of the state of flow in the vicinity of the right-side guide vanes according to Embodiment 2 of the present invention.

Fig. 20 is a detailed explanatory view of the state of flow in the vicinity of the right-side guide vanes according to Embodiment 1 of the present invention.

Fig. 21 is an explanatory view illustrating the state of separation of the flow against the right-side guide vanes when the vanes according to Embodiment 1 of the present invention are inclined rightward.

Figs. 22(a) and 22(b) are explanatory views for explaining the characteristic when the average vane angle of the guide vanes is made to be 45°, according to Embodiment 2 of the present invention.

Fig. 23 is an explanatory view showing the characteristic when the average vane angle of the guide vanes is made to be 45°, according to Embodiment 2 of the present invention.

Figs. 24(a) and 24(b) are explanatory views for explaining the characteristic when the average vane angle of the guide vanes is made to be ±45°, according to Embodiment 2 of the present invention.

Fig. 25 is a characteristic view showing the characteristic when the average vane angle of the guide vanes is made to be ±45°, according to Embodiment 2 of the present invention.

Fig. 26 is a characteristic view showing the rate of reduction of the quantity of blown-out air relative to the vane angle of the guide vanes according to Embodiment 2 of the present invention.

Fig. 27 is omitted.

Fig. 28 is a perspective view showing the air-conditioning equipment.

Fig. 29 is an enlarged vertically-sectioned side view of Fig. 28.

Fig. 30 is a typical view of the air-blowing controller of the air-conditioning equipment of Fig. 28.

Fig. 31 is a system diagram of the air-conditioning equipment of Fig. 28.

Fig. 32 is a flowchart for explaining the operation of the air-conditioning equipment of Fig. 28.

Fig. 33 is a flowchart for explaining the operation of the air-direction adjusting apparatus of the air-conditioning equipment.

Fig. 34 is a perspective view for explaining the state of air-blowing in the air-conditioning equipment of Fig. 33.

Fig. 35 is a perspective view for explaining other state of air-blowing in the air-conditioning equipment of Fig. 33.

Fig. 36 is a conceptual view showing a deflection driving range of the left/right air direction deflection plates in an air-cooling mode of the air-direction adjusting apparatus of the air-conditioning equipment.

Fig. 37 is a conceptual view showing an example of left/right air direction deflection of the left/right air direction deflection plates, corresponding to Fig. 36.

Figs. 38(a) and 38(b) are distribution views showing the temperature distribution 50cm above the floor surface of the living room in a air-heating mode in the configuration of Fig. 36.

Fig. 39 is a characteristic view showing the relation between the angle of left/right air direction deflection and the quantity of air, corresponding to Fig. 36.

Fig. 40 is a flowchart for explaining the operation of the air-direction adjusting apparatus of the air-conditioning equipment.

Fig. 41 is a typical view of the left/right air direction deflection plates showing the operation of the air-conditioning equipment of Fig. 40.

Fig. 42 is a flowchart for explaining the operation of the air-direction adjusting apparatus of the air-conditioning equipment.

Fig. 43 is a plan view showing an example of wall-side mounting of the air-conditioning equipment of Fig. 42.

Fig. 44 is a plan view showing the state of air-blowing in Fig. 42.

Fig. 45 is a plan view conceptually showing an example of an example of angle correction of the left/right air direction deflection plates in Fig. 44.

Fig. 46 is a perspective view showing another embodiment of the present invention.

Fig. 47 is an enlarged perspective view of main part of Fig. 46.

Fig. 48 is a cross-sectional plan view of the blow-outlet of another embodiment of the present invention.

Fig. 49 is an enlarged perspective view of main part of Fig. 48.

Fig. 50 is a front view of the vanes of the present invention.

Fig. 51 is an enlarged view in section along X-X line in Fig. 50.

Fig. 52 is a perspective view corresponding to the above-mentioned Fig. 50.

Fig. 53 is a view showing an example of the section along Y- Y line in Fiq. 52.

Fig. 54 is a view showing another example of the section along Y-Y line in Fig. 52.

Fig. 55 is a view showing another example of the section along Y-Y line in Fig. 52.

Fig. 56 is a perspective view of a vane showing its pivotal bearing.

Fig. 57 is a perspective view of the sleeve to be fitted in the pivotal bearing of Fig. 56.

Fig. 58 is a perspective view of the shaft erected on the inner wall of the blow-outlet correspondingly to the vane of Fig. 56.

Fig. 59 is a vertically sectional view showing the assembled state of pivotal bearing of Fig. 56, the sleeve of Fig. 57, and the shaft of Fig. 58.

Fig. 60 is a perspective view showing a conventional air- conditioning equipment.

Fig. 61 is a cross-sectional view showing the conventional air-conditioning equipment.

Fig. 62 is a vertically sectional view showing the conventional air-conditioning equipment.

Fig. 63 is a detailed explanatory view in the vicinity of the right-side guide vanes of the conventional air-conditioning equipment.

Fig. 64 is a perspective view of the guide vanes of the conventional air-conditioning equipment.

Fig. 65 is a cross-sectional view showing the air-direction changing apparatus of the conventional air conditioner.

Fig. 66 is an explanatory view of the operation state of the apparatus of Fig. 65.

### DETAILED DESCRIPTION OF THE PREFERRED EMBODIMENTS

### Embodiment 1

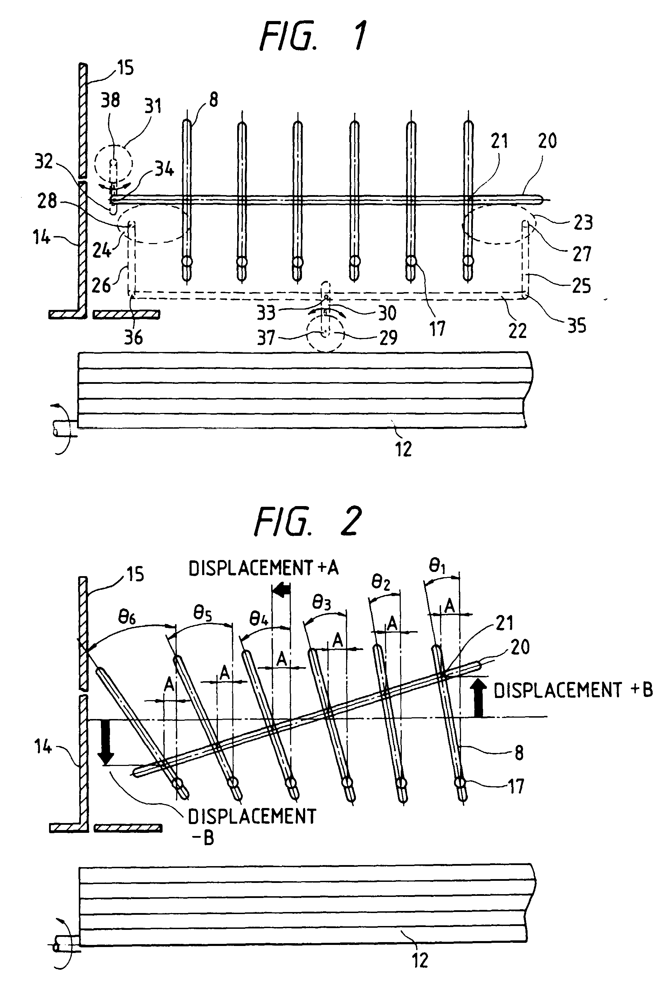

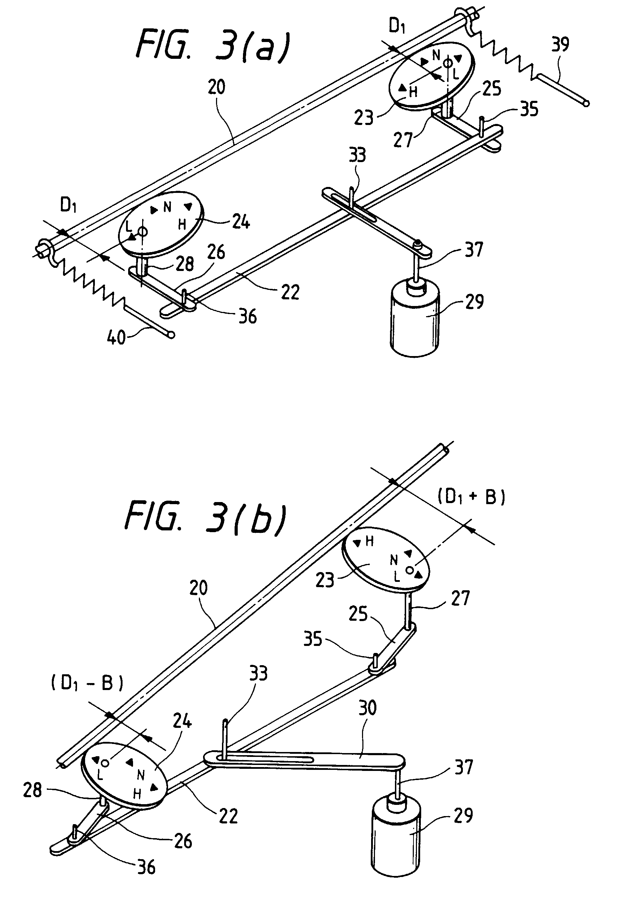

An embodiment of the present invention will be described with reference to the drawings. Fig. 1 is a view for explaining in detail the neighborhood of right guide vanes; Fig. 2, a view for explaining in detail the neighborhood of the right guide vanes in the case in which the guide vanes in Fig. 1 are inclined in the right direction; and Figs. 3(a) and 3(b), perspective views for describing the operation of a driving system in Fig. 1.

In the drawings, the reference numeral 8 represents a plurality of guide vanes provided in parallel between walls 10 and 14 in left and right side portions of a blow-out nozzle 9, pivotally held by pivots 17, and for guiding the direction of blown air in the left/right direction; 12, a blower provided on the side of a blow-outlet 4 in an air course 13, and driven by a motor 18; and 15, a right side wall of a front panel 2. The reference numeral 20 represents a left/right changing rod for directing the plurality of guide vanes 8 at a desired angle in the left/right direction at the same time; and 21, intersections of the guide vanes 8 and the left/right changing rod 20. Accordingly the intersections 21 can move in the longitudinal direction of the left/right changing rod 20 and in the direction perpendicular to the pivots 17 inside the guide vanes 8. The reference numeral 22 represents a left/right inclination changing rod for changing the left/right moving direction of the left/right changing rod 20 and the inclination to the perpendicular direction. The reference numerals 23 and 24 represent left and right cams respectively disposed in left and right end portions of the left/right changing rod 20 so as to rotate about rotation shafts 27 and 28, and for changing the distances between the left/right changing rod 20 and the rotation shafts 27 and 28 so as to change the left/right moving direction of the left/right changing rod 20 and the inclination to the perpendicular direction. The reference numerals 25 and 26 represent left and right cantilevers which rotate around the rotation shafts 27 and 28 integrally with the left and right cams 23 and 24 respectively, and which are connected to the left/right inclination changing rod 22 through the rotation shafts 35 and 36. The reference numeral 29 represents a left/right inclination changing motor having a rotation shaft 37; and 30, a left/right inclination changing cantilever rotated about the rotation shaft 37 by the left/right inclination changing motor 29, held on the left/right inclination changing rod 22 through a pivot 33, and for moving the left/right inclination changing rod 22 in the left/right direction. The pivot 33 can move in the longitudinal direction of the left/right inclination changing cantilever 30. The reference numeral 31 represents a left/right changing motor having a rotation shaft 38; and 32, a left/right changing cantilever rotated about the rotation shaft 38 by the left/right changing motor 31, pivotally held by the left/right changing rod 20 through a pivot 34, and for moving the left/right changing rod 20 in the left/right direction. The pivot 34 can move in the longitudinal direction of the left/right changing cantilever 32. The reference numerals 39 and 40 represent coil springs for making the left/right inclination changing rod contact with the circumferential portions of the left cam 23 and the right cam 24, and for moving the left/right inclination changing rod following the movement of the cams.

Next the operation will be described. The intersections 21 of the guide vanes and the left/right changing rod can move in the direction perpendicular to the pivots 17 inside the guide vanes 8. Therefore, in the state in which the left/right changing rod 20 is made parallel to the straight line connecting the respective pivots 17 as shown in Fig. 1, if the rotation shaft 38 of the left/right changing motor 31 is rotated to rotate the left/right changing cantilever 32, and move the left/right changing rod 20 in the left/right direction through the pivot 34, the distances between the intersections 21 of the guide vanes and the left/right changing rod and the pivots 17 are the same on the respective guide vanes 8. Accordingly the respective guide vanes 8 are all inclined at the same angle. On the other hand, if the left/right changing rod 20 is inclined by +B at the left end and -B at the right end from the referential position relative to the straight line connecting the respective pivots 17 as shown in Fig. 2, the distances between the pivot 17 and the intersections 21 of the guide vanes and the left/right changing rod get shorter gradually in the order from the left end to the right end of the respective guide vanes 8. Therefore, if in this state the rotation shaft 38 of the left/right changing motor 31 is rotated to rotate the left/right changing cantilever 32, and move the left/right changing rod 20 in the right direction by the displacement +A through the pivot 34, the right displacements of the intersections 21 of the guide vanes and the left/right changing rod 21 are indeed the same +A on the respective guide vanes 8, but the distances between the pivots 17 and the intersections 21 are so different that the inclinations of the respective guide vanes 8 get larger gradually from θ₁ to θ₆. Then although the left/right changing cantilever 32 is pivotally held by the left/right changing rod 20 through the pivot 34, the pivot 34 can move in the longitudinal direction of the left/right changing cantilever 32 by a groove provided in the left/right changing cantilever 32, so as to absorb the displacement ±B in the case where the left/right changing rod 20 is inclined.

Next a mechanism for inclining the left/right changing rod 20 relatively to the straight line connecting the respective pivots 17 will be described.

Fig. 3(a) shows the state in which the left/right changing rod 20 is parallel to the straight line connecting the respective pivots 17. Assume the distance between the rotation shafts 27 and 28 and the left/right changing rod 20 at this time is D₁. Since the left/right changing rod 20 is pulled to the left cam 23 and right cam 24 by the coil springs 39 and 40, the left/right changing rod 20 can move while contacting with the circumferential portions of the left cam 23 and the right cam 24. If the rotation shaft 37 of the left/right inclination changing motor 29 is rotated to rotate the left/right inclination changing cantilever 30, the left/right inclination changing rod 22 is moved in the left/right direction through the pivot 33. Since the left cantilever 25 and the right cantilever 26 rotate centering the rotation shafts 27 and 28 respectively, the movement of the left/right inclination changing rod 22 in the left/right direction is to rotate centering the rotation shafts 27 and 28 through the rotation shafts 35 and 36. Since the left cantilever 25 and the right cantilever 26 are interlinked with the left cam 23 and the right cam 24 through the rotation shafts 27 and 28 respectively, the rotations of the left cantilever 25 and the right cantilever 26 cause the left cam 23 and the right cam 24 rotate, respectively. If the left/right inclination changing motor 29 is rotated as shown in Fig. 3(b), the left cam 23 acts to enlarge the distance of the rotation shaft 27 and the left/right changing rod 20 to (D₁+B), while the right cam 24 acts to reduce the distance of the rotation shaft 28 and the left/right changing rod 20 to (D₁-B). As a result, the left/right changing rod 20 is inclined relatively to the straight line connecting the respective pivots 17. The reference marks H, N and L drawn on the left cam 23 and the right cam 24 herein show the positions in which the distance between the respective rotation shafts 27 and 28 and the left/right changing rod 20 is made (D₁+B), D₁ and (D₁-B) respectively.

Thus, if all of the guide vanes are controlled so that the angle of inclination of each guide vane becomes larger as the guide vane approaches an end of the arrangement of the guide vanes in either left or right direction of blown air, for example, blown air in the right direction is reflected on the wall 14 of the right side portion of the nozzle and the right wall 15 of the front panel, or as to a flow to be deflected to a forward straight flow, a flow passing between the guide vanes adjacent to or near the flow to be deflected is blown out at an angle larger than a preset angle of right inclination. Accordingly, the flow to be deflected is deflected to the composite vector of both the flows, so that the whole of the blown flows can be blown in the established direction of blowing.

Although the mechanism near the right guide vanes in the case of inclining the guide vanes in the right direction was described in the above embodiment, a similar effect can be obtained by a similar mechanism in the case of inclining the guide vanes in the left direction.

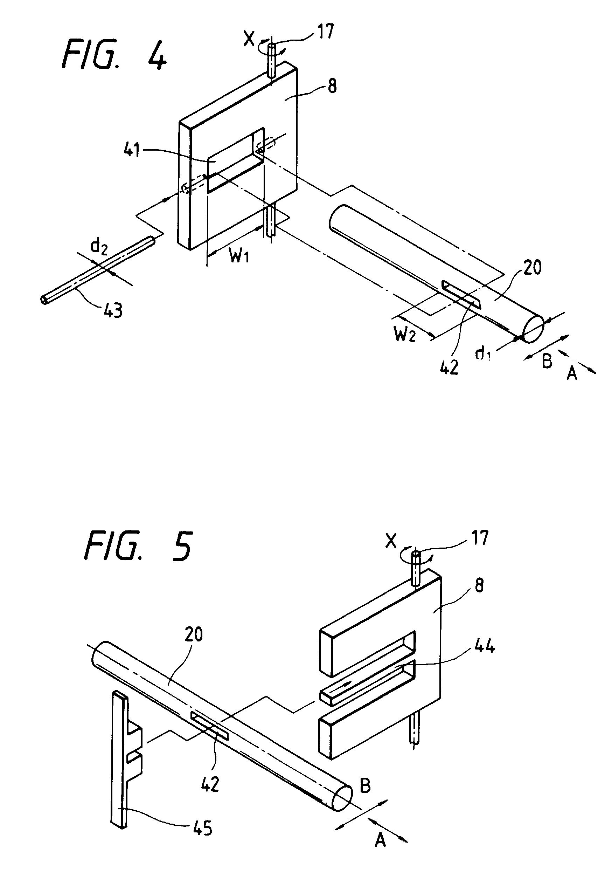

Further, Fig. 4 is a perspective view illustrating in detail a mechanism for connecting the guide vanes 8 and the left/right changing rod 20 in the above-mentioned Embodiment 1.

In the drawing, the reference numeral 8 represents a guide vane pivotally held by a pivot 17 and for guiding the direction of blown air in the left/right direction; 20, a left/right changing rod for directing a plurality of such guide vanes 8 at a desired angle in the left/right direction at the same time; 41, an opening provided on the guide vane, the opening being a vane- direction slide hole having the long side W₁ so that the left/right changing rod 20 can move by ±B in the direction perpendicular to the pivot 17; and 42, an opening provided on the left/right changing rod, the opening being a rod-direction slide hole having the width W₂ in the longitudinal direction of the rod so that a violent stress is not given to a slide shaft 43 even if the intersecting angle of the guide vane 8 and the left/right changing rod 20 changes. With such a configuration, the left/right changing rod 20 can be slid along the slide shaft 43 in the direction perpendicular to the pivot 17 of the guide vane 8.

Fig. 5 is a perspective view illustrating in detail another mechanism for connecting the guide vanes 8 and the left/right changing rod 20 in the above-mentioned Embodiment 1.

In the drawing, the reference numeral 8 represents a guide vane pivotally held by a pivot 17 and for guiding the direction of brown air in the left/right direction; 20, a left/right changing rod for directing a plurality of such guide vanes 8 at a desired angle in the left/right direction at the same time; 44, a slide bar formed by cutting the guide vane into an E-shape; and 45, a guide vane frame attached to an end portion of the guide vane to prevent the left/right changing rod 20 from coming out of the slide bar. In the state in which the guide vane 8 and the guide vane frame 45 are built in, the slide bar 44 has enough length for the left/right changing rod 20 to move by ±B. The reference numeral 42 represents an opening provided on the left/right changing rod, and the opening 42 is a rod-direction slide hole having the width W₂ in the longitudinal direction of the rod so that a violent stress is not given to the slide bar 44 even if the intersecting angle of the guide vane 8 and the left/right changing rod 20. With such a configuration, the left/right changing rod 20 can be slid along the slide bar 44 in the direction perpendicular to the pivot 17 of the guide vane 8.

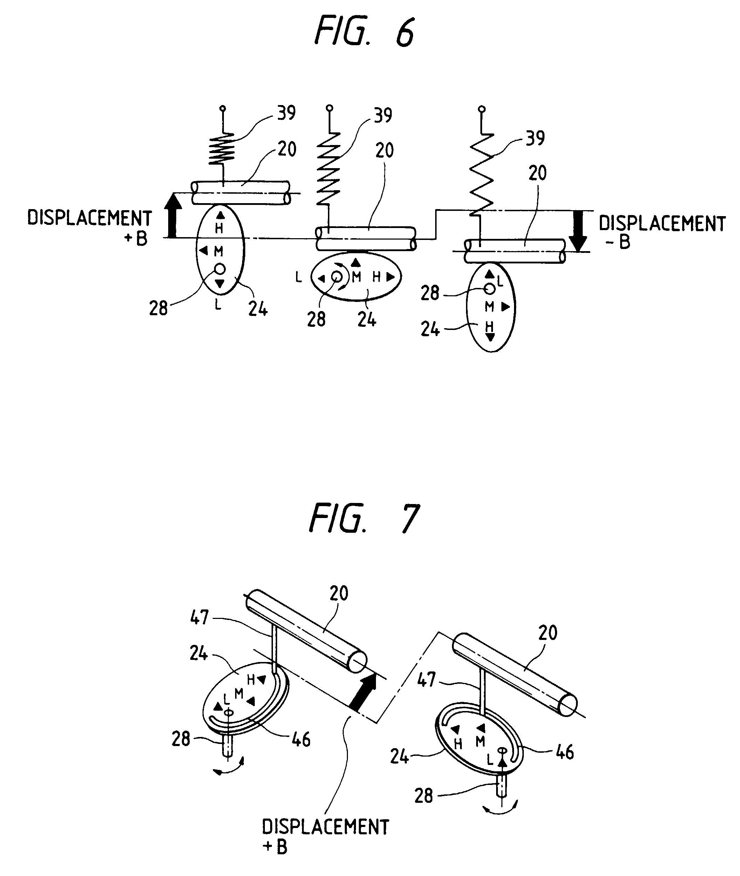

Moreover, Fig. 6 is an explanatory view illustrating another embodiment of a mechanism for moving the left/right changing rod 20 while making the left/right changing rod 20 contact with the circumference portion of the left cam 23 or the right cam 24 in the above-mentioned Embodiment 1. In the drawing, the reference numeral 20 represents a left/right changing rod; and 24, a right cam which rotates centering a rotation shaft 28. The reference numeral 39 represents a coil spring, which is made to act here to press the left/right changing rod 20 toward the right cam while the coil spring, in the embodiment of Fig. 3, is made to act to pull the left/right changing rod toward the right cam. In the same manner with such a configuration, the left/right changing rod 20 can be moved while contacting with the circumference portion of the left cam 23 or the right cam 24.

Fig. 7 is an explanatory view illustrating another embodiment of a mechanism for moving the left/right changing rod 20 while making the left/right changing rod 20 contact with the circumference portion of the left cam 23 or the right cam 24 in the above-mentioned Embodiment 1. In the drawing, the reference numeral 20 represents a left/right changing rod; 24, a right cam which rotates centering a rotation shaft 28; 46, a profile groove provided on the right cam; and 47, a guide pin which moves along the profile groove 46 as the right cam 24 rotates. One end of the guide pin 47 is fixed to the left/right changing rod 20, and the other end is inserted to the profile groove 46. According to this embodiment, the coil spring 39 can be omitted, and a mechanism for restraining the cam from rotating beyond its rotation limit can be also eliminated.

Although the above-mentioned embodiment was described in connection with the mechanism surrounding the right cam 24, not to say, a similar effect can be obtained if a similar mechanism is adopted as the mechanism near the left cam 23.

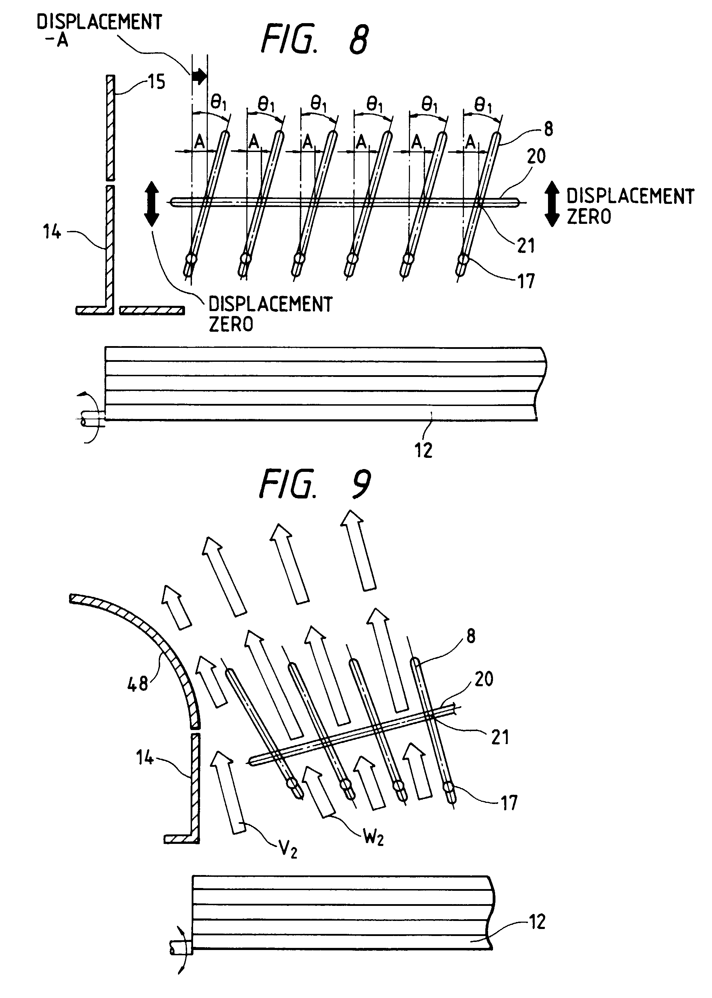

If there is provided an air-direction adjusting apparatus in which the control system of guide vanes is divided into two, left and right systems, and driving systems for making the inclinations of the guide vanes different from each other between the systems are provided in the same manner as in the above- mentioned embodiment, the apparatus can be driven with a high accuracy and in a wide mode even if human bodies are located scatteringly. In this case, if the blowing directions of the respective systems are the same, a group of guide vanes to be inclined are controlled in the same manner as in the above- mentioned embodiment, while the other group of guide vanes are controlled in the same manner as in the conventional art. Fig. 8 shows a view for explaining in detail the neighborhood of a right group of guide vanes in the case the guide vanes of Fig. 1 are inclined in the left direction. As illustrated in the drawing, the left/right changing rod 20 is made parallel with a straight line connecting the respective pivots 17, that is, the displacements of both ends of the left/right changing rod 20 are made B=0. In this state, if both ends of the left/right changing rod 20 is moved in the left direction by displacement -A, the inclinations of all the respective guide vanes 8 are the same θ₁, because the distances between the respective intersections 21 of the guide vanes and the left/right changing rod and the pivots 17 are the same, and the quantities of movement of the respective intersections 21 in the left/right direction are the same -A. Thus, an effect similar to that in the above-embodiment can be obtained if the control system of guide vanes is divided into two, left and right systems, and the systems are driven by different, left and right driving systems for controlling a group of guide vanes to be inclined as shown in Fig. 2 and for controlling the other group of guide vanes as shown in Fig. 8, respectively.

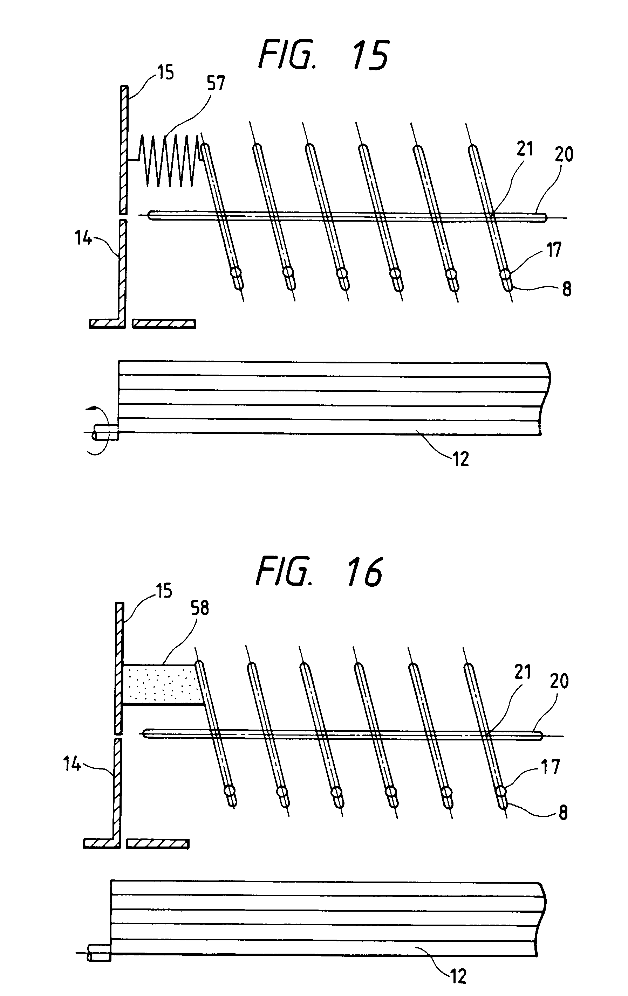

Further in addition, Fig. 9 is a view for explaining in detail the neighborhood of right guide vanes in the case where the guide vanes in Fig. 1 are inclined in the right direction, when left and right side walls of a front panel of a body are formed into bell-mouth shapes in the above-mentioned Embodiment 1. In the drawing, the reference numeral 48 is a right side wall having a bell-mouth shape, in which a bell mouth is formed by making the distance between a left side wall 11 and a right side wall 15 gradually larger as goes in the downstream of blown air. With such a configuration, toward a flow V₂ reflected on a wall 14 of a right side portion of a nozzle and the right side wall 15 of the front panel or deflected into a forward straight flow thereby, a flow W₂ passing between guide vanes adjacent to or near the flow V₂ is blown out at a larger angle than a preset angle of left/right inclination. Accordingly the flow V₂ is deflected in the direction of the composite vector (V₂+W₂) of both the flows, and there is added an effect that this flow adheres to the bell-mouth-like right side wall 48 by Coanda effect, so that there is an effect that the direction of blowing can be established more accurately.

Fig. 15 is a view illustrating another embodiment of the present invention, which is a view for describing in detail the neighborhood of right guide vanes. The reference numeral 57 represents a bellows-like bulkhead connecting the rightmost one of the guide vanes 8 and the right side wall 15 of a body without interfering with the motion of the guide vanes, so as to block the space between the respective vane and the side wall of the body. If the space between the leftmost or rightmost guide vane and the left or right side wall of the body is always blocked by such a bellows-like bulkhead, it is possible to eliminate a flow reflected on the surface of the light and right side walls and the surface of the left and right side walls of the front panel, or a flow deflected into a forward straight flow, so that, the blown air flow as a whole can be blown out in the present left/right direction of blowing.

Although the mechanism near the right guide vanes in the case of inclining the guide vanes in the right direction was described in the above-mentioned embodiment, a similar effect can be obtained if guide vanes for blocking the spaces between the respective vanes and the body side wall are inclined in the left direction so as to block the space between the respective leftmost guide vane 8 and the body left side wall 11 by use of a bellows-like bulkhead without interfering with the motion of the guide vanes.

Fig. 16 is a view illustrating another embodiment of the present invention, which is a view for explaining in detail the neighborhood of right guide vanes.

The reference numeral 58 represents a sponge-like bulkhead connecting the rightmost one of the guide vanes 8 and the right side wall 15 of a body without interfering with the motion of the guide vanes, so as to block the space between the respective vane and the side walls of the body.

As has been described, if the space between the leftmost or rightmost guide vane and the left or right side wall of the body is blocked by the sponge-like bulkhead when the guide vane is inclined in the right direction, it is possible to eliminate a flow reflected on the surface of the right side wall of the nozzle and the surface of the right side wall of the front panel, or a flow deflected into a forward straight flow, so that the blown air flow as a whole can be blown out in the present left/right direction of blowing.

Although the mechanism near the right guide vanes in the case of inclining the guide vanes in the right direction was described in the above-mentioned embodiment, a similar effect can be obtained also in the case where guide vanes for blocking the spaces between the respective vanes and the body side wall are inclined in the left direction so as to block the space between the respective leftmost guide vane 8 and the body left side wall 11 by use of a sponge-like bulkhead without interfering with the motion of the guide vanes.

Further, although the space between the guide vane and the body side wall is blocked by the sponge-like bulkhead when the guide vane is inclined in the above-mentioned embodiment, the sponge-like bulkhead may be designed so as to provide a normally blocking state.

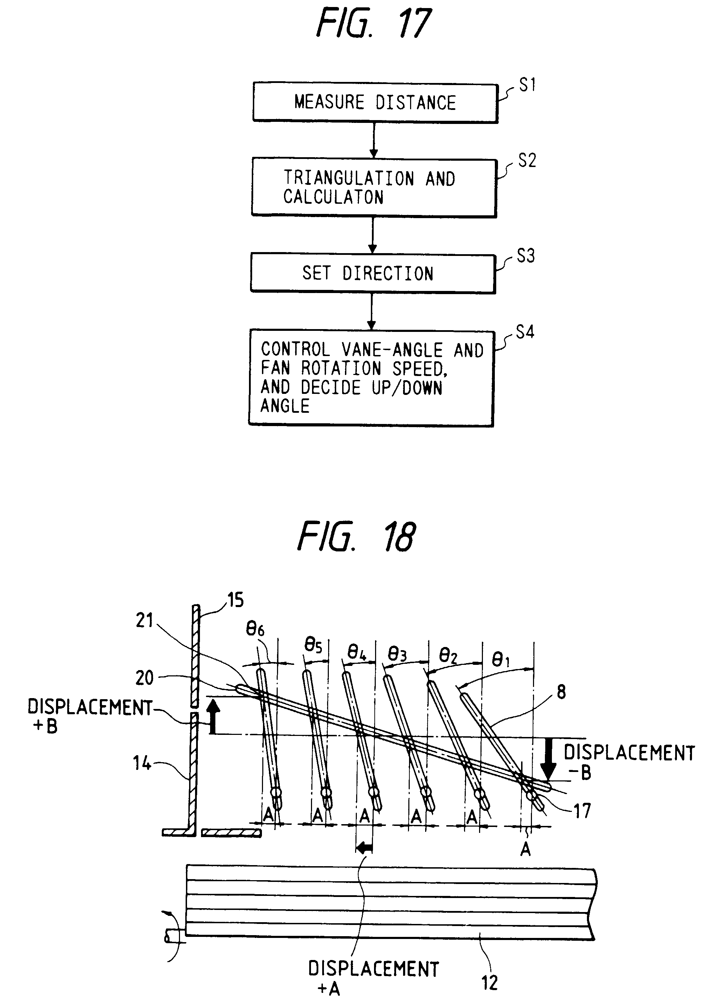

If a sensor for detecting the location of a human body is used in an air-direction adjusting apparatus in an air-conditioning equipment according to any of the above-mentioned embodiments so that the direction of blowing of an air-conditioning air current is controlled automatically in accordance with an output of the sensor to thereby make the air-conditioning air current arrive at the location of the human body concentratedly, it is possible to establish the direction of blowing of the air-conditioning air current accurately, and it is possible to design an air-direction adjusting apparatus which is superior in controllability. Fig. 17 is a flow chart for explaining the control operation of such an air-direction adjusting apparatus. First in a step S1, the distance to a human body is measured from two radiation temperature sensors attached to the air-conditioning equipment. In a step 2, triangulation is performed from outputs of the two radiation temperature sensors, so as to compute the direction of the location of the human body and the distance between the human body and the air-conditioning equipment. Next in a step S3, the direction of blowing of the air-direction adjusting apparatus is set to the above-mentioned direction of the location of the human body. In a step S4, the angle of changing of vanes and the rotational speed of a fan (air velocity) are controlled on the basis of the above-mentioned distance and the direction of location of the human body, and the up/down angle of blowing out is decided taking temperature drift into consideration.

In the structure in which the control of guide vanes is divided into two, left and right systems, each of which has a driving system for making the inclinations of the guide vanes different from each other, if a sensor for detecting the location of human bodies is used so that the direction of blowing of an air-conditioning air current is controlled automatically in accordance with an output of the sensor, the two, left and right systems of guide vanes are controlled to be inclined in the left and right directions respectively when the output of the sensor shows human bodies are scattering, so that it is possible to design an air-conditioning system in which air blowing can be spread wide to cover the region of location of the human bodies.

Although a wall-mounted type air-conditioning equipment was described in the above-mentioned embodiment, a ceiling-hung type or ceiling-buried type air-conditioning equipment may be used. Then an effect similar to that in the above-mentioned embodiment can be obtained.

### Embodiment 2

Fig. 18 is a view illustrating another embodiment of the present invention, which is a view for explaining in detail the neighborhood of right guide vanes in the case of inclining the guide vanes in the right direction. For example, this can be attained by a structure similar to that of Fig. 1. In Embodiment 1, the left/right changing motor 29 is rotated counterclockwise, the left/right changing rod 22 is moved in the left direction and the motion thereof is transmitted to the left and right cantilevers 25 and 26, the left and right cams 23 and 24 are rotated clockwise around the rotation shafts 27 and 28 respectively, and the left/right changing rod 20 is inclined by +B at its left end and -B at its right end from reference positions relative to the straight line connecting the respective pivots 17. Further in this state, the rotation shaft 38 of the left/right changing motor 31 is rotated to rotate the left/right changing cantilever 32 so that the left/right changing rod 20 is moved by the displacement +A in the right direction through the pivot 34. On the other hand, in this embodiment, the left/right changing motor 29 is rotated clockwise, the left/right changing rod 22 is moved in the right direction and the motion thereof is transmitted to the left and right cantilevers 25 and 26, the left and right cams 23 and 24 are rotated counterclockwise around the rotation shafts 27 and 28 respectively, and the left/right changing rod 20 is inclined by -B at its left end and +B at its right end from reference positions relative to the straight line connecting the respective pivots 17. Further in this state, the rotation shaft 38 of the left/right changing motor 31 is rotated to rotate the left/right changing cantilever 32, the left/right changing rod 20 is moved by +A in the right direction through the pivot 34. Thus, the distances between the pivots 17 and the intersections 21 become gradually larger as going from the leftmost one of the guide vanes 8 to the rightmost one. Accordingly, the inclinations of the respective guide vanes 8 are gradually smaller from θ₁ to θ₆. Here the left/right changing cantilever 32 is pivotally held by the left/right changing rod 20 through the pivot 34 similarly in Embodiment 1, but a groove provided in the left/right changing cantilever 32 makes the pivot 34 movable in the longitudinal direction of the left/right changing cantilever 32. Therefore, it is possible to absorb the displacement ±B when the left/right changing rod 20 is inclined.

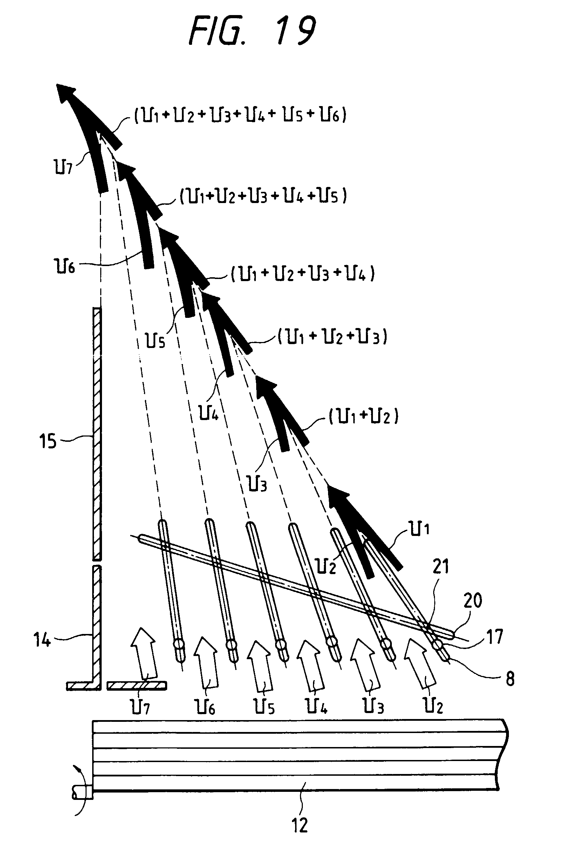

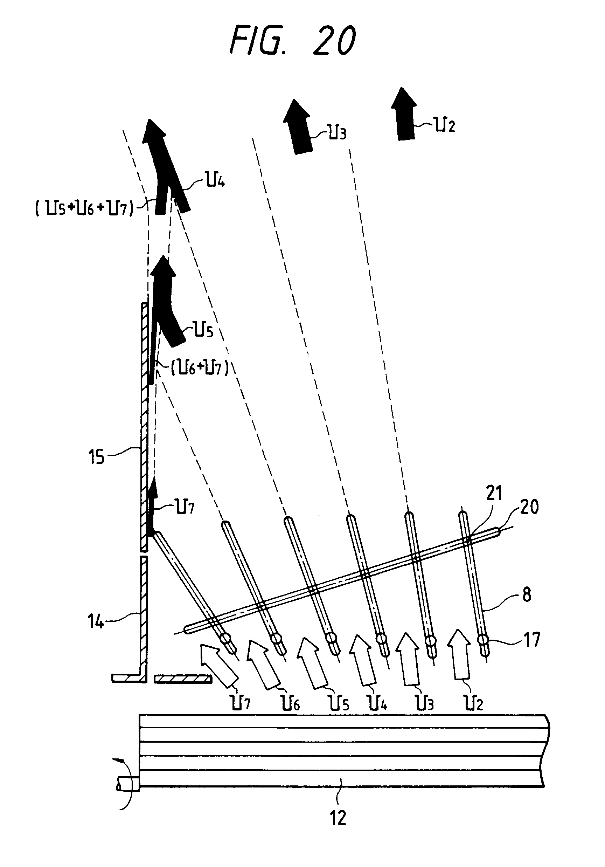

Next the operation will be described. Figs. 19 and 20 are views showing the flow of blown air near right guide vanes according to this embodiment and Embodiment 1 in the case in which a blown-out air current controlled by a number of guide vanes and desired to be blown out of the leftmost or rightmost portion interfere with a left or right wall surface of a nozzle and a left or right side wall surface of a front panel when the inclinations of the respective guide vanes are large or when the distance between the guide vanes and a blow-out nozzle outlet is large. In such a case where the inclinations of the guide vanes are large or that the distance between the guide vanes and the blow-out nozzle outlet is large, if the inclination angle of each guide vane is made larger as the guide vanes approach an endmost portion as shown in Embodiment 1 of Fig. 20, flows U₅ to U₇ between the guide vanes hit on the right side wall 14 of the nozzle and the right side wall of the front panel so as to be made into a forward straight flow expressed by the composite vector (U₅+U₆+U₇). Accordingly, after being blown out of the nozzle, the flow can be inclined only in the composite direction of the composite vectors (U₅+U₆+U₇) and U₄. In such a case, the inclination angle is made smaller as approaches the endmost portion as in this embodiment to thereby prevent the interference of the flow with the right side wall 14 of the nozzle and the right side wall of the front panel, and the inclination angle of the farthest guide vane having no interference like this is made large. Then, as shown in Fig. 19, composite vectors (U₁+U₂), (U₁+U₂+U₃), D, (U₁+U₂+U₃+U₄+U₅+U₆+U₇) are formed between the flow U₁ of the leftmost guide vanes and the flow L₂ with the flow U₂, between the composite flow (U₁+U₂) and the flow U₃ with the further right adjacent guide vanes, ..., so that it is possible to incline the flows on a large scale. Further, according to the present invention, it is possible to reduce the loss in static pressure caused by the interference of a flow to the right side wall 14 of the nozzle and the right side wall of the front panel, so that it is possible to restrain the quantity of blown air from decreasing.

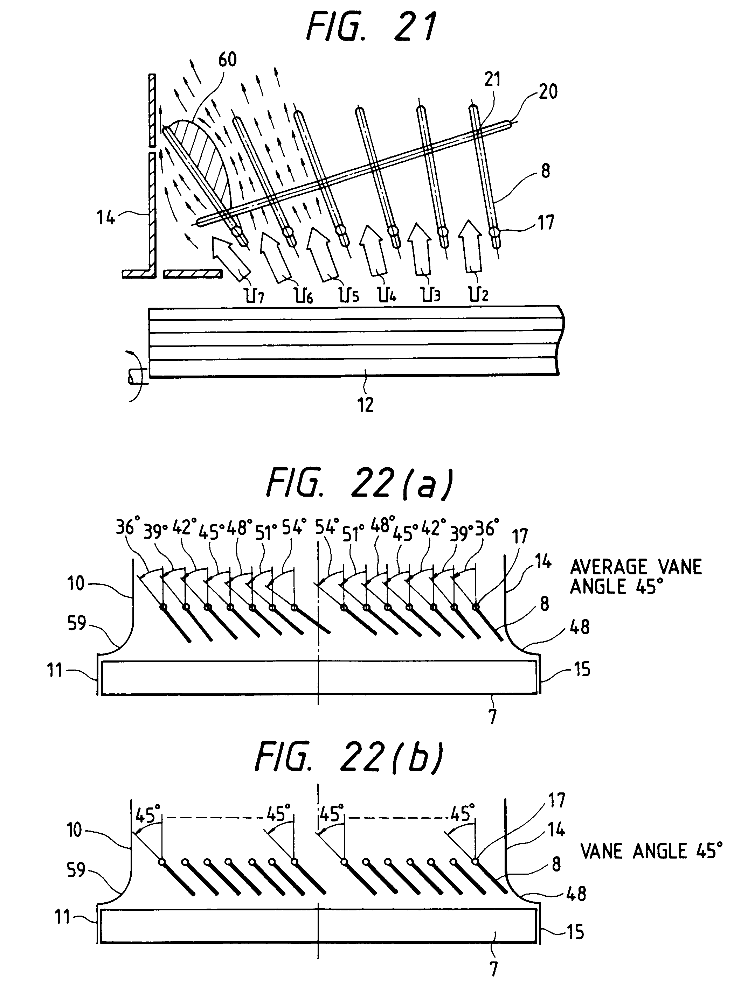

In addition, at the time of air-cooling operation in the structure of Embodiment 1, if the inclination angle of the endmost guide vane is large, a separation area 60 is produced on a negative pressure side of the guide vane as shown in Fig. 21 so as to involve high-temperature and high-moisture surrounding air. Thus, the high-temperature and high-moisture surrounding air contacts with the negative pressure side of the rightmost guide vane while a low-temperature air current contacts with the pressure side. Accordingly, dew drops are produced on the negative pressure side of the guide vane, and the dew drops scatter in a room. It is therefore necessary to consider new drain processing. On the other hand, in the case of this embodiment, the inclination angle of the rightmost guide vane is so small that the separation area 60 on the negative pressure is hardly produced, and it is therefore possible to prevent such a problem of formation of dew drops.

Although the mechanism near the right guide vanes in the case where the guide vanes are inclined in the right direction was described in the above-mentioned embodiment, a similar effect can be obtained in the case where the guide vanes are inclined in the left direction by a similar mechanism.

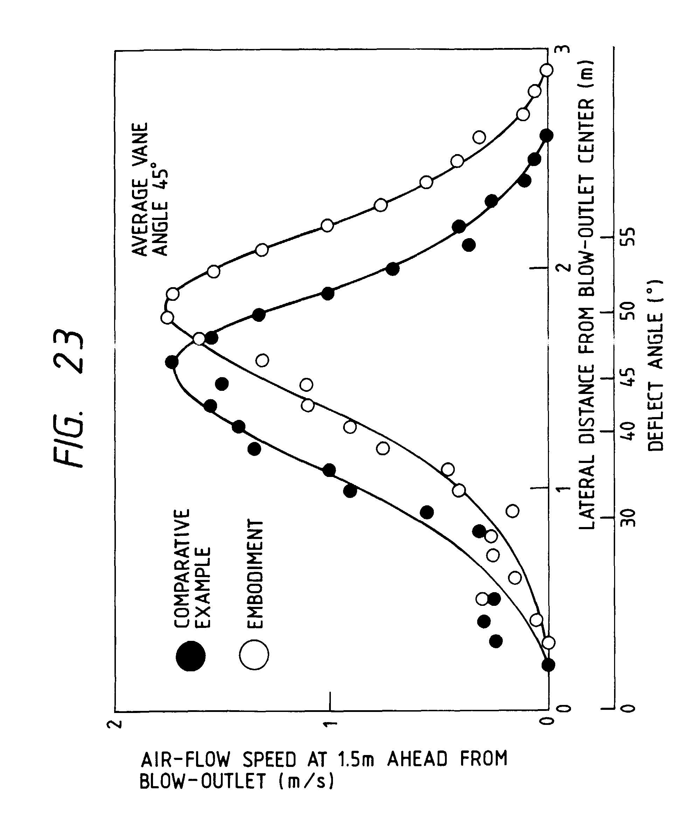

Fig. 23 shows the distribution of blown air in the position 1.5m ahead the blow-outlet by use of an air-direction adjusting apparatus and comparative example shown in Figs. 22(a) and 22(b), respectively. In the drawing, the reference numeral 59 represents a left side wall when the distance between the left side wall 11 and the right side wall 15 is made gradually larger as goes in the downstream of blown air to thereby form a bell-mouth. Fig. 22(a) shows an air-direction adjusting apparatus in which left and right sets of seven guide vanes are made stepwise smaller by 3°, into 54°, 51, -- , 36°, as goes from the center toward the endmost respectively, so that the average angle is 45°. Fig. 22(b) is an air-direction adjusting apparatus shown as a conventional example, in which all the guide vanes, fourteen in total, are inclined by 45°. According to Fig. 23, the distribution of blowing-out speed does not so much change between the embodiment and the conventional example. However, as for the effect of air-direction deflection, a large deflection angle 50° can be obtained in the embodiment while 45° in the conventional example. According to the embodiment, it is possible to deflect air direction to a large angle with a high controllability.

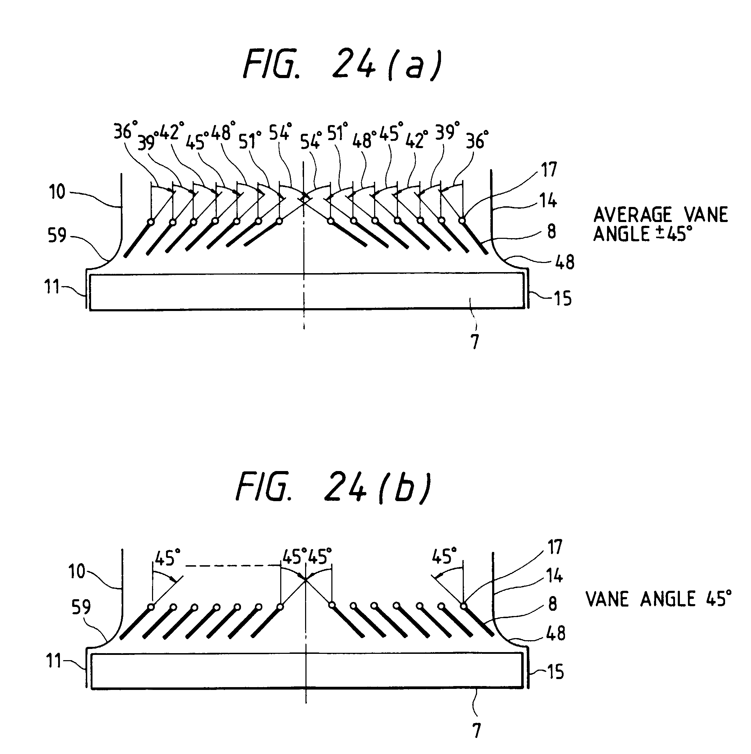

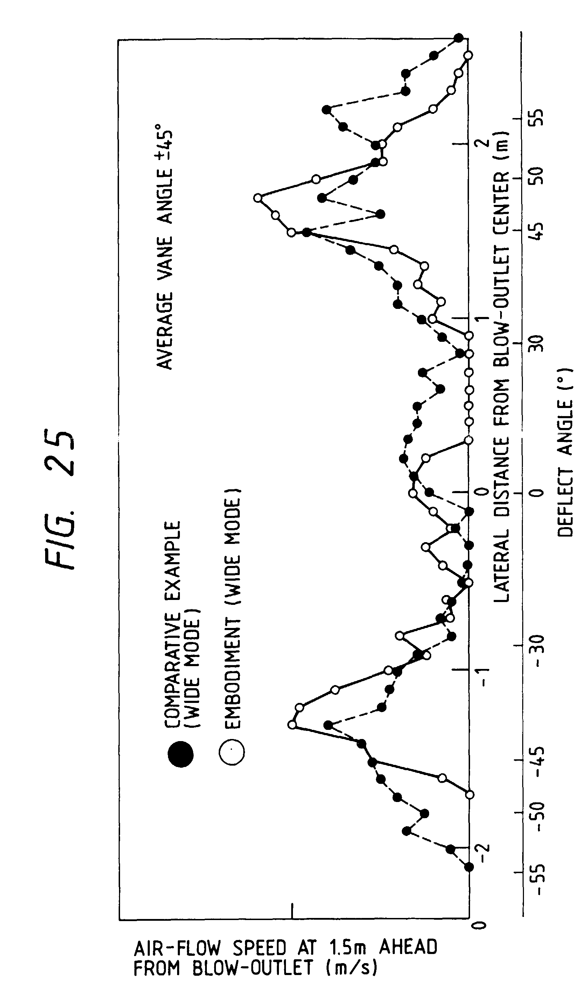

Next, Fig. 25 shows the distribution of blown air in the position 1.5m ahead the blow-outlet by use of an air-direction adjusting apparatus and comparative example in the case of blowing out in a wide mode with guide vanes put in charge of left and right respectively as shown in Figs. 24(a) and 24(b). Fig. 24(a) shows an air-direction adjusting apparatus in which left and right sets each composed of seven guide vanes are made stepwise smaller by ±3°, into ±54°, ±51°, --- ±36°, as goes from the center toward the endmost respectively, so that the average angle is ±45°. Fig. 24(b) is an air-direction adjusting apparatus shown as a conventional example, in which all the left and right sets each composed of seven guide vanes are inclined by ±45°, respectively. According to Fig. 25, in comparison with the conventional example, the distribution of air-blowing speed in the embodiment reduces air blown out in the front direction so that it is possible to blow separately in the left and right directions more distinguishably. Therefore, if the air-direction adjusting apparatus shown in this embodiment is used, when a human body exists in front of the apparatus in the case the blow-out direction of an air-conditioning air current is controlled automatically by use of a sensor for detecting the location of the human body, an air-heating air current is not hit on the human body directly. Accordingly, it is possible to eliminate an unpleasant feeling caused by the feeling of draft, and it is possible to ensure arrival distance to heat a room as a whole.

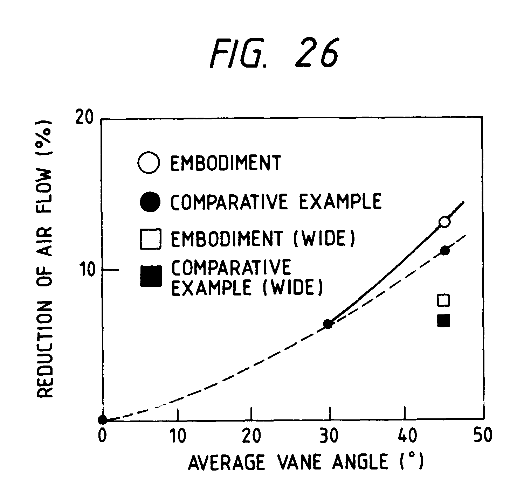

Fig. 26 shows the ratio of quantity reduction of blown air to the quantity of front-blown air when the air-direction adjusting apparatus shown in Figs. 22(a), 22(b) 24(a) and 24(b) is used. In the drawing, in the embodiment, the vane angle is made stepwise smaller by 3° in the case of the average vane angle 45°, and stepwise smaller by 2°, in the case of 30°, as goes from the center toward the endmost. The average angles in the two cases are 45° and 30° respectively. In addition, the average angle is made ±45° in the case of a wide blow-out mode. It is understood from the drawing, by using the air-direction adjusting apparatus of this embodiment, not only it is possible to obtain a large deflection angle as mentioned above, but the ratio of the reduction quantity of blown air is very small, 1%, relative to the conventional example, in the case of 45, deflection.

Although the case in which the distance between the guide vanes and the blowing nozzle outlet is large was described in the above embodiment, it is possible to incline an air current on a large scale even in the case of small distance in the same manner as in the case of large distance, and it is possible to further restrain the reduction of the quantity of the blown air.

Although an air-direction adjusting apparatus in an air-conditioning equipment was described in the above embodiment, the embodiment may be applied to another air-current blow-out apparatus with an effect similar to that of the above embodiment.

Although the case in which a human body was regarded as an object and an air-direction adjusting apparatus for air-conditioning air current by use of a sensor for detecting the location of a human body was described in the above-mentioned embodiment, any object other than a human body may be regarded as an object to be hit with an air current, and further any one other than a sensor may be used if it can detect the location of the object. Then an effect similar to that of the above- mentioned embodiment can be obtained.

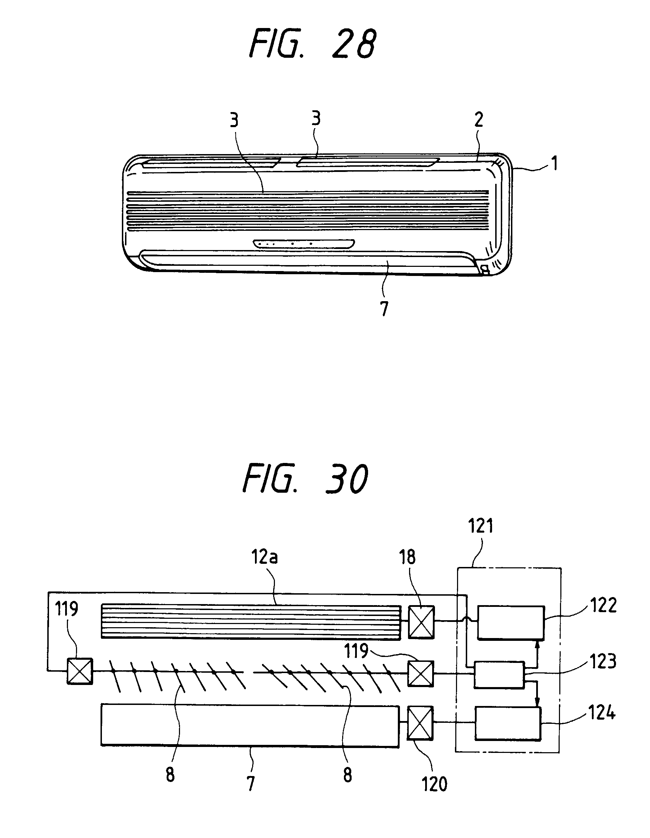

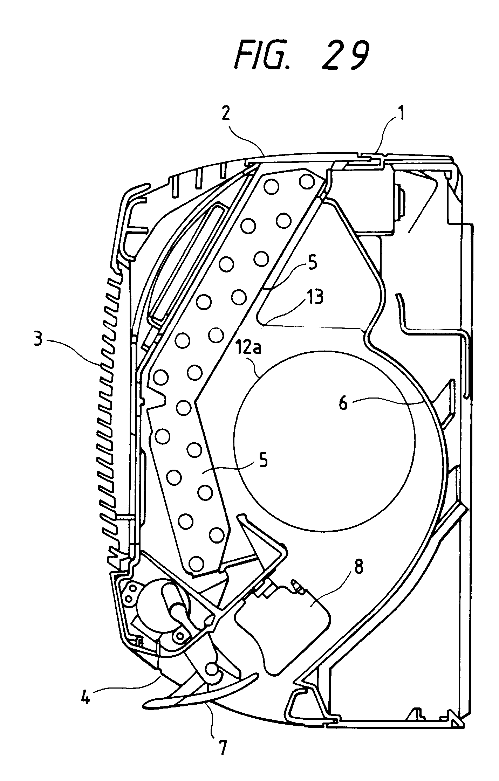

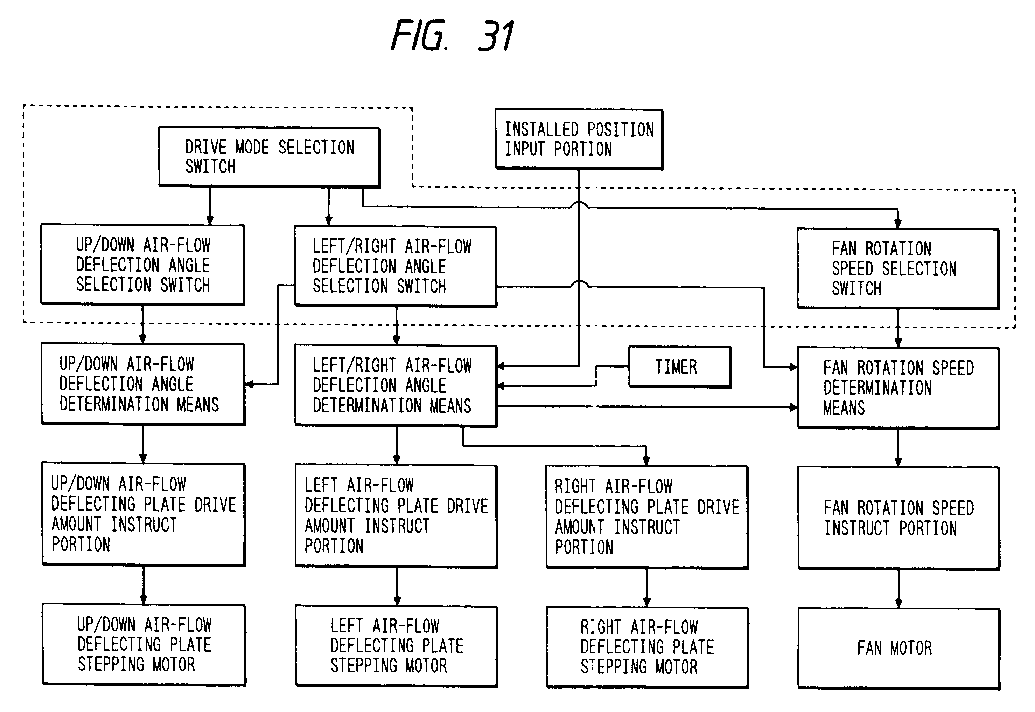

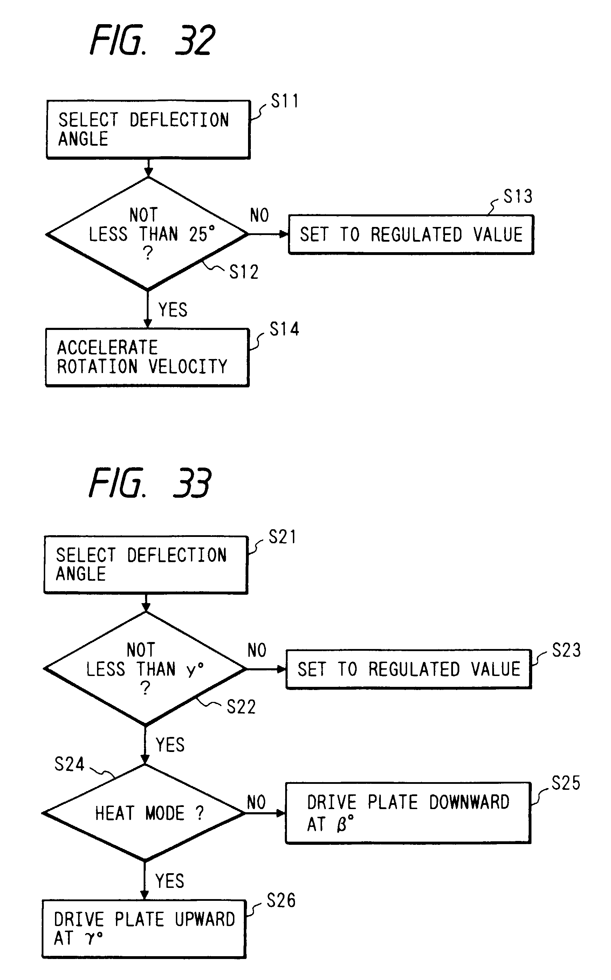

Figs. 28 to 32 are views illustrating another embodiment of the present invention. Fig. 28 is a perspective view of an air- conditioning equipment; Fig. 29, an enlarged vertical sectional side view of Fig. 28; Fig. 30, a typical view of a blowing control apparatus of the air-conditioning equipment of Fig. 28; Fig. 31, a blowing control system diagram of the air-conditioning equipment of Fig. 28; and Fig. 32, a flow chart for explaining the operation of the air-conditioning equipment of Fig. 28. In the drawings, the reference numeral 1 represents a body; 2, a front panel covering the front side of the body 1 and having a suction opening 3; 4, a blow-outlet opening in the lower portion of the front side of the body 1; 5, a heat exchanger disposed in opposition to the suction opening 3; and 6, a casing provided in the body 1 so as to form an air course 13.

The reference numeral 7 represents an up/down air direction deflection plate provided in the blow-outlet 4, pivotally attached to left and right side walls of the blow-outlet 4 through a shaft fixed to left and right end portions, and constituted by change vanes for converting the direction of blown air to the horizontal, vertically and perspective directions; 8, a plurality of left/right air direction deflection plates provided and pivotally held between the walls of the left and right end portion of the blow-outlet 4, and constituted by guide vanes for converting the direction of blown air in the left/right direction; and 12a, a cross flow fan provided in the air course 13 on the side of the blow-outlet 4 and driven by a motor 18.

The reference numeral 119 represents a driving means constituted by a stepping motor for changing the inclination angle of the left/right air direction deflection plates 8; and 120, a driving means constituted by a stepping motor for changing the inclination angle of the up/down air direction deflection plate 7.

The reference numeral 121 represents a control device provided with a rotation velocity instruction portion 122 for the motor 18, a driving quantity detection portion 123 and a driving quantity instruction portion 124 for the driving means 119 and 120.

In an air-direction adjusting apparatus in an air-conditioning equipment having such a configuration, the direction of an air current fed out of the cross flow fan 12a is controlled by the left/right air direction deflection plates 8 and the up/down air direction deflection plate 7. The deflection angles of the left/right air direction deflection plates 8 and the up/down air direction deflection plate 7 are changed by the driving means 119 and 120. The rotation velocity of the motor 18 is controlled by the rotation velocity instruction portion 122. The driving quantities of the driving means 119 and 120 are controlled by the driving quantity detection portion 123 and the driving quantity instruction portion 124.

Fig. 31 shows a system for deciding instruction contents of the above instruction portions in the control device 121.

That is, through not shown in the drawing, respective selection switches are operated manually to perform the selection of running conditions such as cooling, heating, dehumidifying and so on, the selection of an up/down air direction deflection angle, the selection of a left/right air direction deflection angle, and the selection of rotation velocity of the cross flow fan 12a, that is, the selection of a running mode.

Correction as follows is performed in accordance with respective selected conditions, so that the up/down air direction deflection angle, the left/right air direction deflection angle and the rotation velocity of the cross flow fan 12a are decided and supplied from the respective instruction portions.

The operation of the air-direction adjusting apparatus in the air-conditioning equipment will be described with reference to the flow chart shown in Fig. 32. That is, the selection of the deflection angle of the left/right air direction deflection plates 8 is performed in a step S11, and right ones of the left/right air direction deflection plates 8 and left ones of the left/right air direction deflection plates 8 are driven in the right and left directions by means of the driving means 119 and 120, in regarding the time of the maximum deflection as 0 pulse. Thus their deflection angles are set.

Next the processing is advanced to a step S12, and then advanced to a step S14 when input values of driving means 119 and 120 are not more than 160 pulses and not less than 420 pulses, that is, when the deflection angle of the left/right air direction deflection plates 8 is not less than 25°, and the rotation velocity of the cross flow fan 12a is accelerated to more than a standard one. The processing is advanced to a step S13 when the deflection angle of the left/right air direction deflection plates 8 is not more than 25°, and the rotation velocity of the cross flow fan 12a is set to a rated value.

If the deflection angle of the left/right air direction deflection plates 8 is not less than 25°, a blown-out air current is separated so that air in a living room flows into the blow-outlet 4. As a result, dew drops are apt to be produced in a cooling mode.

As the quantity of blown air is lower, high temperature air is apt to flow into the blow-outlet 4 because of the decrease of the speed of the blown air. If the quantity of blown air is low, that is, if the quantity of air passing the heat exchanger 5 in the body 1 is small, it is apparent that the temperature of a blown air current is decreased. The decrease of the blown air current accelerate dew drops to any portion of the blow-outlet 4.

Therefore, when the deflection angle of the left/right air direction deflection plates 8 is not less than 25°, the rotation velocity of the cross flow fan 12a is increased to more than the standard one, to thereby make the temperature of a blown air current higher, so that air in a living room cannot flow into the blow-outlet 4. The above control does not need any special detection element and can be performed without requiring any additional constituent.

With the above configuration, it is possible to solve such a problem that an air-blowable area in the left/right direction is limited and made so narrow that the blowing to a room as a whole becomes difficult, and ununiformity of temperature is produced to lose comfortableness. Since the air-blowable area in the left/right direction is expanded, it is possible to improve the comfortableness of a living room.

In addition, since the above-mentioned control restrains the quantity of blown air from decreasing in a heating mode so as to enable an air current to reach a floor of a living room, it is possible to improve the comfortableness of the living room.

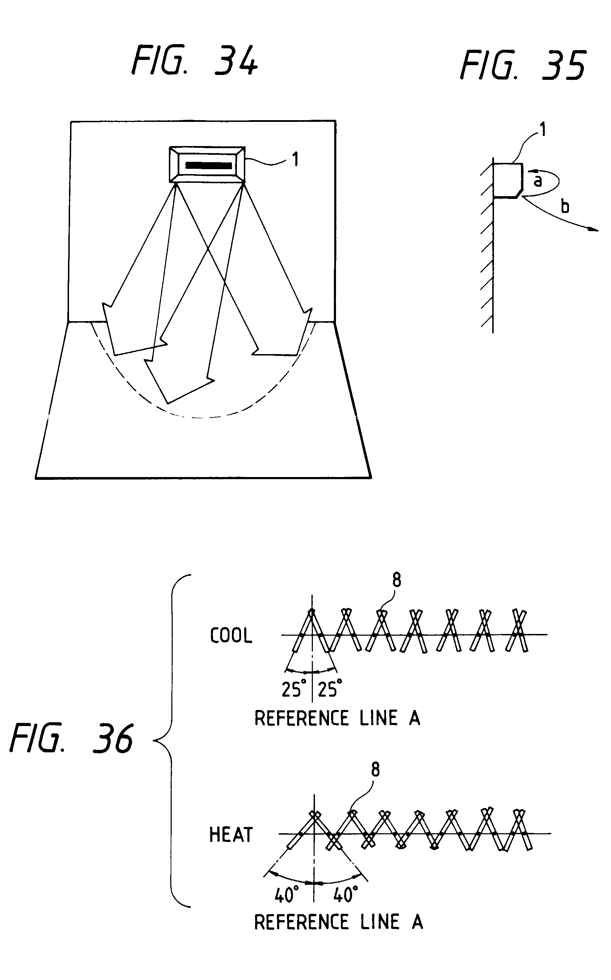

Figs. 33 to 35 are views showing a further embodiment of the present invention. Fig. 33 is a flow chart for explaining the operation of an air-direction adjusting apparatus in an air- conditioning equipment in this embodiment; Fig. 34 is a perspective view for explaining an air-blowing condition of the air-conditioning equipment depicted in Fig. 33; and Fig. 35 is a perspective view for explaining another air-blowing condition of the air-conditioning equipment depicted in Fig. 33. The air-direction adjusting apparatus in the air-conditioning equipment in Figs. 33 to 35 is configured in the same manner as that in Figs. 28 to 32.

The operation of the air-direction adjusting apparatus in the air-conditioning equipment configured as described above will be described below with reference to the flow chart of Fig. 32.

That is, the deflection angle of the left/right air-direction deflection plates 8 is selected in step S21 and then the situation of the routine goes to step S22. If the deflection angle of the left/right air-direction deflection plates 8 is smaller than y°, the situation of the routine goes to step S23 in which the rotational speed of the cross flow fan 12a is selected to be a predetermined value.

In the case where the deflection angle of the left/right air-direction deflection plates 8 is not smaller than y°, the situation of the routine goes to step S24. If the operating mode is not an air-heating mode, the situation of the routine further goes to step S25 in which the angle of the up/down air-direction deflection plate 7 is selected to be a lower angle value than a predetermined value. If a decision in the step S24 is made that the operating mode is an air-heating mode, the situation of the routine goes to step S26 in which the angle of the up/down air- direction deflection plate 7 is selected to be an upper angle value than the predetermined value.

For example, in an air-heating mode, heated air is generally blown downward. If the angle of the up/down air-direction deflection plate 7 is in the predetermined value in this case, the positions where the blown air current reaches the floor of the living room are arranged at equal distances from the body 1, that is, on a circular arc with its center at the body 1, as shown in Fig. 34.

As is obvious from Fig. 34, the positions where the blown air current reaches the floor of the living room are arranged nearer the body 1 mounting surface as the left/right air- direction deflection angle becomes larger.

Further, the direction of the location of a human body with respect to the air- conditioning equipment and the distance from the air-conditioning equipment mounting surface to the human body may be detected by using a human body detection sensor so that comfortableness in the location of the human body can be improved. When the deflection angle of the left/right air-direction deflection plates 8 is large in the aforementioned condition, the angle of the up/down air-direction deflection plate 7 is selected to be an upper angle value in order to improve accuracy in positions of arrival of the blown air current so that comfortableness can be improved.

In the configuration of this embodiment, the value of the deflection angle y° of the left/right air-direction deflection plates 8 is set to 30° under the consideration of the detection area of the human body detection sensor.

Further, in this embodiment, an effective operation for improvement in air current direction control accuracy can be achieved not only in the air-conditioning equipment using such a human body detection sensor but in an air-conditioning equipment not using any human body detection sensor.

Further, when the up/down air-direction deflection angle is in a lower angle value than the predetermined value irrespective of the operating mode, the deflection angle of the left/right air-direction deflection plates 8 is selected to be a larger value to thereby set the angle of the up/down air-direction deflection plate 7 to an upper angle value to improve accuracy in positions of arrival of the blown air current so that comfortableness can be improved. Further, under the consideration of the characteristic of the air-conditioning equipment, when the deflection angle of the left/right air- direction deflection plates 8 is not smaller than the predetermined value, the angle of the up/down air-direction deflection plate 7 can be corrected to be an upper angle value to thereby improve accuracy in positions of arrival of the blown air current so that comfortableness can be improved.

In an air-cooling mode, the up/down air-direction deflection plate 7 is generally used in an upward angle. Accordingly, when the left/right air-direction deflection angle is large, the quantity of blown air is reduced so that the speed of blown air is lowered. As a result, there is a tendency that the blown air current is sucked into the body 1 through the suction inlet 3 easily as represented by the arrow a shown in Fig. 35 so that the blown air current cannot circulate in the living room. In this condition, the temperature of the blown air current falls so that dew deposition onto respective portions of the blow-outlet 4 occurs to inhibit comfortableness in the living room.

In order to solve the aforementioned disadvantage, therefore, the angle of the up/down air-direction deflection plate 7 is corrected in the downward direction to thereby prevent the blown air current from entering into the suction inlet 3. As a result, the blown air current can circulate in the living room, so that not only comfortable environment can be maintained but dew deposition onto respective portions of the blow-outlet 4 can be prevented.

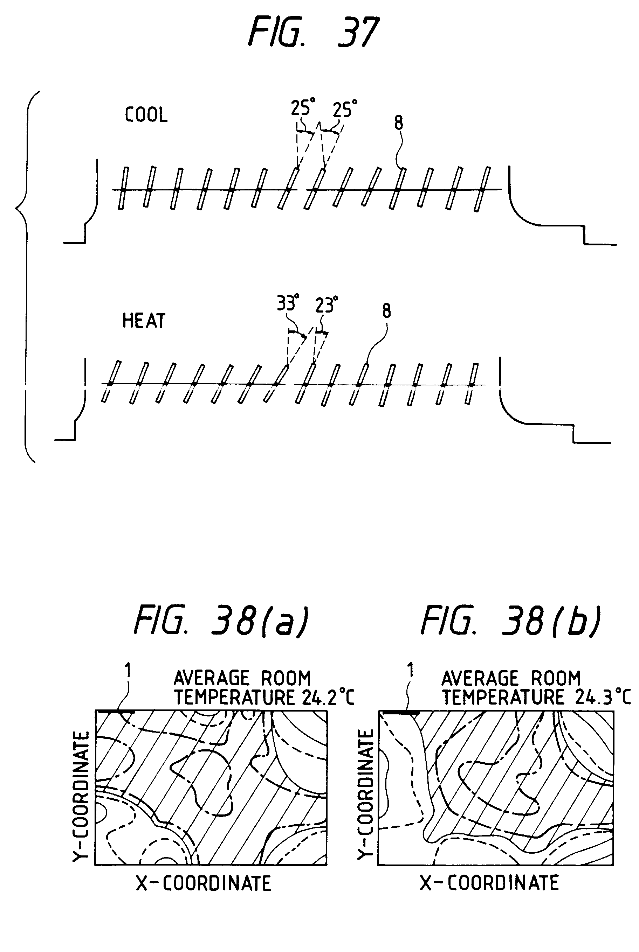

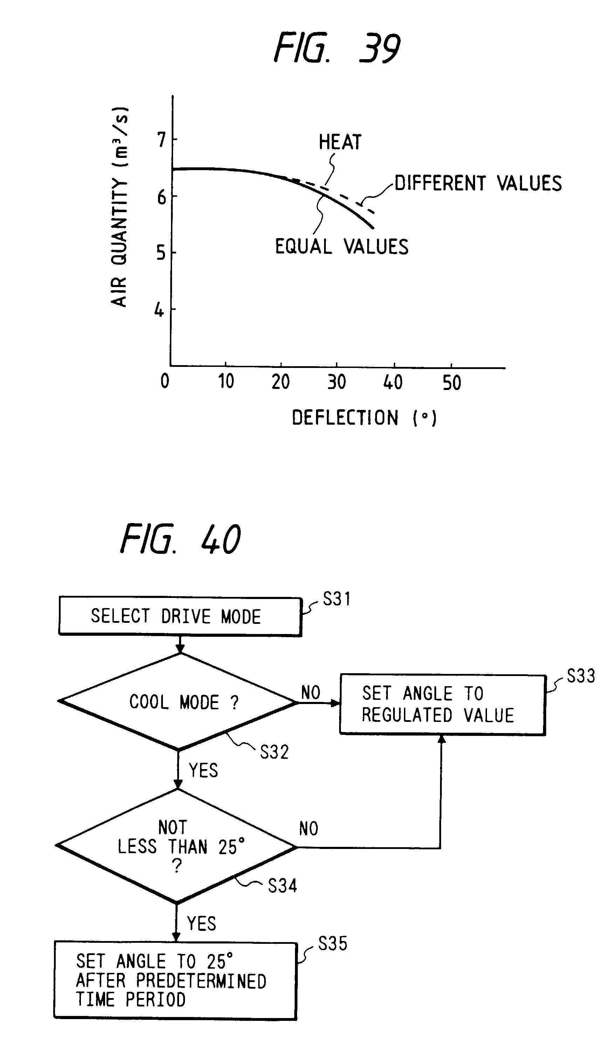

Figs. 36 to 39 are views showing a further embodiment of the present invention. Fig. 36 is a conceptual view showing the driving range of left/right air-direction deflection plates in air-cooling and air-heating modes in an air-direction adjusting apparatus in an air-conditioning equipment in this embodiment; Fig. 37 is a conceptual view showing an example of left/right air-direction deflection of the left/right air-direction deflection plates correspondingly to Fig. 36; Fig. 38 is a distribution view showing the temperature distribution at a distance of 50 cm from the floor of the living room in an air- heating mode correspondingly to Fig. 36; and Fig. 39 is a characteristic view showing the relationship between the left/right air-direction deflection angle and the quantity of blown air correspondingly to Fig. 36. The air-direction adjusting apparatus in the air-conditioning equipment in Figs. 36 to 39 is configured in the same manner as that in Figs. 28 to 32.

In the air-direction adjusting apparatus of the air-conditioning equipment in which a plurality of left/right air- direction deflection plates 8 are provided as shown in Fig. 36, the left/right air-direction deflection plates 8 in an air- heating mode are driven in a range of the left/right deflection angle of 40° with respect to the reference line A, shown in Fig. 36, perpendicular to the blow-outlet 4 so that the blown air can reach the whole region of the living room.

Compared with the deflection driving angle range of the left/right air-direction deflection plates 8 in an air-heating mode, the left/right air-direction deflection plates 8 in an air- cooling mode are driven in a range of the left/right angle of 25° so that dew deposition onto the blow-outlet 4 can be prevented.

As a result, even in the case where the deflection driving range of the left/right air-direction deflection plates 8 in an air-cooling mode is limited from the point of view of prevention of dew deposition, sufficiently comfortable living room environment is achieved because cooled air has a tendency to circulate easily. On the other hand, in an air-heating mode, heated air which has a tendency to circulate hardly in the living room can made to reach necessary points of the living room by the left/right air-direction deflection plates 8 having the deflection driving range widened, so that heating can be performed speedily.

Further, in the embodiment shown in Figs. 36 to 39, two systems are provided for driving the left/right air-direction deflection plates 8, so that comfortableness in the living room can be improved more greatly by diffusing the blown air current. The diagram (a) of Fig. 38 shows the temperature distribution at a distance of 50 cm from the floor of the living room in the case where the left/right air-direction deflection plates 8 are set at different angles to diffuse the air current. The diagram (b) of Fig. 38 shows the temperature distribution at a distance of 50 cm from the floor of the living room in the case where the left/right air-direction deflection plates 8 are set at equal angles.

The body 1 is set in the position smeared with black ink in Fig. 38 in which there is shown the condition in which air is blown to the right from the body 1 correspondingly to Fig. 37. The shadowed portion in Fig. 38 is a region in which the living condition is concluded to be comfortable from the temperature distribution. As is obvious from Fig. 38, comfortable space of a wider range is achieved in the case where the air current is blown out while being diffused.

Fig. 39 shows the relationship between the angle of a main air current and the quantity of blown air at a rotational speed of the cross flow fan 12a in the case where the angles of the left/right air-direction deflection plates 8 are set to be equal values. As is obvious from Fig. 39, the lowering of the quantity of blown air in accordance with the change of the air direction is prevented when the angles are set to be different values between the left and the right. That is, compared with the case where the angles of the left/right air-direction deflection plates 8 are set to be equal values, the quantity of blown heated-air is increased. Accordingly, it may be said that the setting of the angles to different values is excellent both in performance and in comfortableness.

Although the embodiment in Figs. 36 to 39 shows the case where the blown air current is diffused, it may be effective that the blown air current is condensed in accordance with the characteristic of the controller 121.

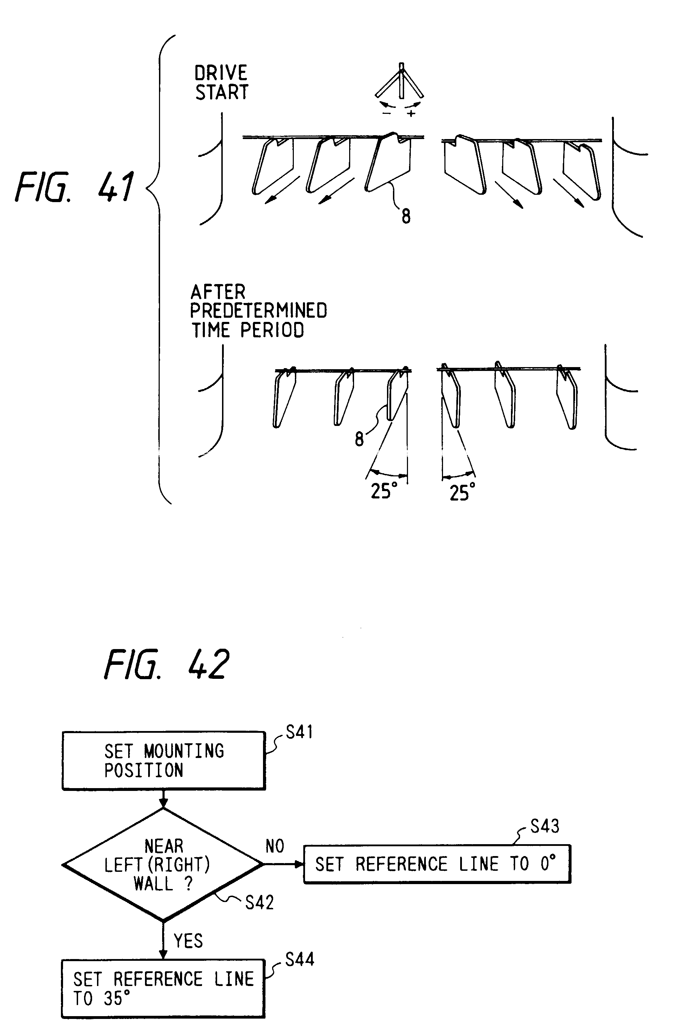

Figs. 40 and 41 are views showing a further embodiment of the present invention. Fig. 40 is a flow chart for explaining the operation of an air-direction adjusting apparatus in an air- conditioning equipment in this embodiment; and Fig. 41 is a typical view of left/right air-direction deflection plates showing the operation of the air-direction adjusting apparatus depicted in Fig. 40. The air-direction adjusting apparatus in the air-conditioning equipment in Figs. 40 and 41 is configured in the same manner as that in Figs. 28 to 32.

That is, the deflection driving range of the left/right air- direction deflection plates 8 can be widened by applying the following method to the embodiment shown in Figs. 36 to 39.

The operation of the air-direction adjusting apparatus in the aforementioned air-conditioning equipment will be described blow with reference to the flow chart shown in Fig. 40.

That is, the operating mode is selected in step S31 and then the situation of the routine goes to step S32. If there is no selection of an air-cooling mode, the situation of the routine goes to step S33 in which the deflection angle of the left/right air-direction deflection plates 8 is selected to be a predetermined value.

If an air-cooling mode is selected, the situation of the routine goes to step S34 in which if the deflection angle of the left/right air-direction deflection plates 8 is smaller than 25°, the situation of the routine goes back to the step S33.

If in the step S34 the deflection angle of the left/right air-direction deflection plates 8 is not smaller than 25°, the situation of the routine goes to step S35 in which the deflection angle of the left/right air-direction deflection plates 8 is selected to be 25° with the passage of a predetermined time after the starting of the air-conditioning equipment.

For example, in the case where the two, left and right groups of left/right air-direction deflection plates 8 are deflected to the left and right respectively, it is desirable that air blowing is carried out avoiding the human body in the living room at the time of the starting of the air-conditioning equipment because the low-temperature blown air gives an unpleasant feeling to the human body when the temperature of the living room is high.

Contrariwise when the temperature of the living room is stabilized to be near to a set value, a comfortable feeling is increased by blowing the air current to the human body because the difference between the temperature of the blown air current and the temperature of the living room is small.

In the case where the deflection angle of the left/right air-direction deflection plates 8 is set to a large value in order to increase comfortableness at the time of the starting of the air-conditioning equipment and the operation of the air- conditioning equipment is continued while the large value of the angle is maintained, the left/right air-direction deflection plates 8 become an obstacle so that separation of the blown air current occurs. This causes dew deposition onto respective portions of the blow-outlet 4. However, the dew deposition can be prevented by reducing the deflection angle of the left/right air-direction deflection plates 8. As a result, separation of the blown air current is eliminated so that the dew deposition onto respective portions of the blow-outlet 4 can be prevented.

From the aforementioned reason, air is blown along the walls of the living room so that an unpleasant feeling is not given to the human body in the living room. Further, when the temperature of the living room falls with the passage of a predetermined time, the deflection angle of the left/right air-direction deflection plates 8 is reduced to 25° to thereby not only give a comfortable air-current feeling to the human body in the living room but prevent the dew deposition onto respective portions of the blow-outlet 4.

The aforementioned effect can be also achieved even in the case where the left/right air-direction deflection plates 8 are deflected at equal angles, that is, in the case where air is blown to the right or left of the body 1.

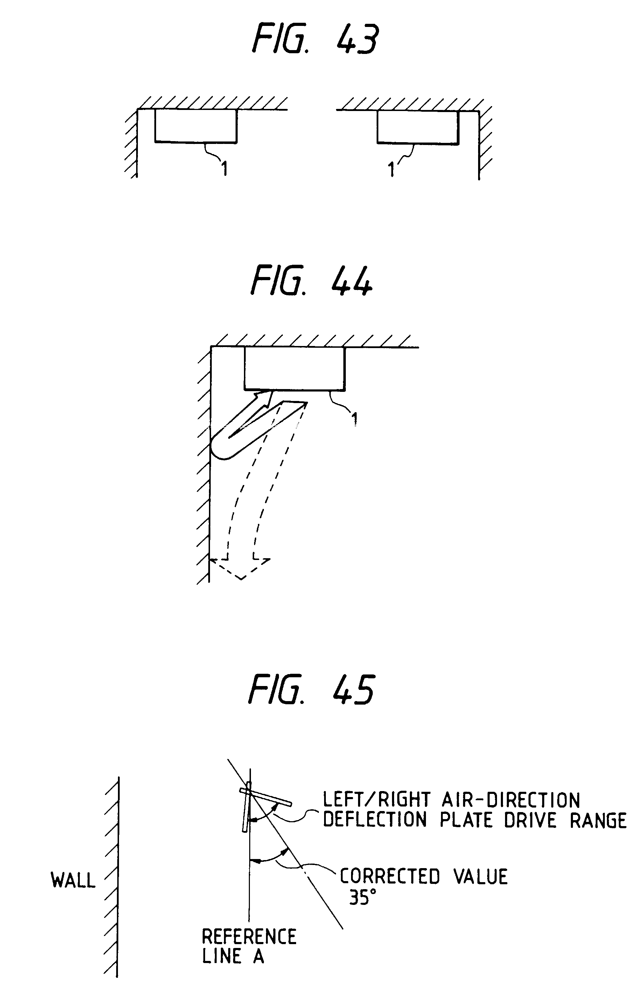

Figs. 42 to 45 are views showing a further embodiment of the present invention. Fig. 42 is a flow chart for explaining the operation of an air-direction adjusting apparatus in an air- conditioning equipment in this embodiment; Fig. 43 is a plan view showing an example in which the air-conditioning equipment depicted in Fig. 42 is mounted by the wall; Fig. 44 is a plan view showing the air-blowing condition in Fig. 42; and Fig. 45 is a plan view conceptually showing an example of correction of the deflection angle of left/right air-direction deflection plates in Fig. 44. The air-direction adjusting apparatus in the air- conditioning equipment in Figs. 42 to 45 is configured in the same manner as that in Figs. 28 to 32.

That is, the reference line A in Fig. 36 can be corrected in accordance with the body 1 mounting position by applying the following method to the embodiment shown in Figs. 36 to 39.

The operation of the air-direction adjusting apparatus in the aforementioned air-conditioning equipment will be described below with reference to the flow chart shown in Fig. 42.

That is, in step S41, the mounting or installing condition is selected as to whether the body 1 is set by the left wall or by the right wall or in the other place as shown in Fig. 43. Then, the situation of the routine goes to step S42 in which if the body is set neither by the left wall nor by the right wall, the situation of the routine goes to step S43 in which the deflection driving reference line of the left/right air-direction deflection plates 8 is set to 0°.

If the conclusion in the step S42 is that the body is set by the left or right wall, the situation of the routine goes to step S44 in which the deflection driving reference line of the left/right air-direction deflection plates 8 is corrected by 35° away from the wall as shown in Fig. 45.

That is, when the air-blowing angle in the direction of the wall is large in the case where the wall is on the left or right side of the body 1, the blown air current flows as represented by the solid line in Fig. 44. Accordingly, the blown air current is sucked into the air-conditioning equipment through the suction inlet 3 without circulation in the living room. In the case where the body 1 has a room temperature sensor not shown in the drawing, cooled/heated air blown out through the blow-outlet 4 may strike on the room temperature sensor directly so that the room temperature may be detected by mistake. In such case, both the lowering of comfortableness and the lowering of heating performance occur.

On the contrary, when the air-blowing angle in the direction of the wall is set to be not larger than an angle in which the blown air current is not reflected on the wall as represented by the broken line in Fig. 44, the reflection of the air current on the wall is prevented so that the blown air current can circulate in the living room.

As a result, not only comfortableness can be improved but both the lowering of cooling performance and the lowering of heating performance can be prevented.

Further, the air-blowing allowable range can be expanded so as to be away from the wall, so that blown air can be supplied to all the corners of the living room. As a result, blown air can be always supplied to any place in the living room irrespective of the body 1 mounting position.

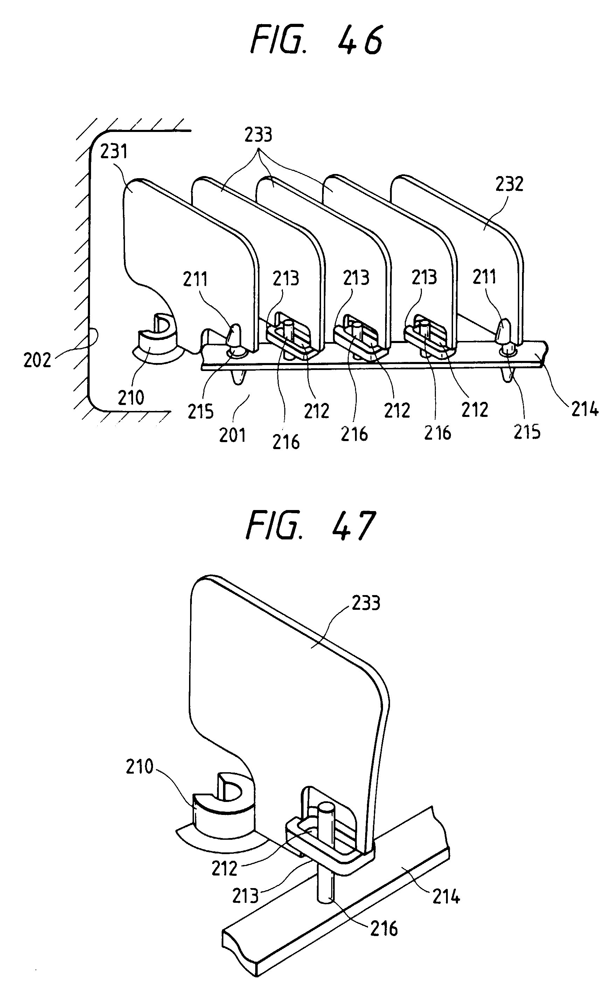

Figs. 46 and 47 are views showing an embodiment of the present invention. Fig. 46 is a perspective view thereof; and Fig. 47 is an enlarged perspective view of important part of Fig. 46. The other structure in Figs. 46 and 47 is the same as that in Fig. 65. In the drawings, the reference numeral 201 represents a blow-outlet (nozzle); 202, an inner wall of the blow-outlet 201; 231, a first-kind vane disposed to be near the inner wall 201 which is one side of the blow-outlet 1; and 210, a C-shaped pivotal bearing shaped obtained by cutting one side of a ring and provided in the vicinity of one end of an edge portion on one side of the first-kind vane 231.

The reference numeral 211 represents a rotational bearing provided on the other-end side of the edge portion in which the pivotal bearing 210 of the first-kind vane 231 is provided; and 232, a second-kind vane disposed so as to be opposite to the first-kind vane 231 among one group of vanes and formed in the same manner as the first-kind vane 231 so that the second-kind vane is provided with both a pivotal bearing 210 and a rotational bearing 211 but the two bearings are arranged at a shorter distance than the distance in the first-kind vane 231.

The reference numeral 233 represents a plurality of third- kind vanes provided separately between the first-kind vane 231 and the second-kind vane 232. The third-kind vanes are formed in the same manner as the first-kind vane 231 and provided with pivotal bearings 210 provided in positions corresponding to the pivotal bearing 210 of the first-kind vane 231, each of the third-kind vanes being provided with an engagement portion 213 formed on the other-end side of an edge portion where the pivotal bearing 210 is disposed and having an elongated hole (slot) 212 along the length of the edge portion.

The reference numeral 214 represents a connection arm disposed along end portions opposite to the pivotal bearings, of the first-, second- and third-kind vanes 231, 232 and 233. The connection arm has connection shafts 215 provided at its opposite end portions so as to be pivotally held by the rotational bearings 211 of the first- and second-kind vanes 231 and 232 respectively, and intermediate connection shafts 216 provided at its intermediate portion so as to be movably fitted into the elongated holes 212 of the engagement portions 213 of the third- kind vanes 233 respectively.

In the air-direction adjusting apparatus in the air-conditioning equipment configured as described above, the following operation is carried out in the case where two, left and right groups of vanes are disposed in the left and right respectively as shown in Fig. 66 so that the lower sides are far from each other in Fig. 66. That is, the respective end portions opposite to the pivotal bearings 210, of the first-, second- and third-kind vanes 231, 232 and 233 are engaged with the connection arm 214. Particularly the end portions of the third-kind vanes 233 are engaged with the connection arm 214 by the intermediate connection shafts 216 movably fitted into the elongated holes 212 of the engagement portions 213.

Accordingly, the first-, second- and third-kind vanes 231, 232 and 233 are moved respectively in accordance with the lengthwise movement of the connection arm 214 so as to be disposed in inclined posture in the same manner as in the case of Fig. 66.

It is therefore unnecessary that the third-kind vanes 233 are produced while the distances between the pivotal bearings 210 and the engagement portions 213 are successively changed in accordance with the positions of the arrangement of the third- kind vanes 233. Accordingly, the third-kind vanes 233 can be produced easily, so that the air-direction adjusting apparatus in the air-conditioning equipment can be assembled up by simple work.

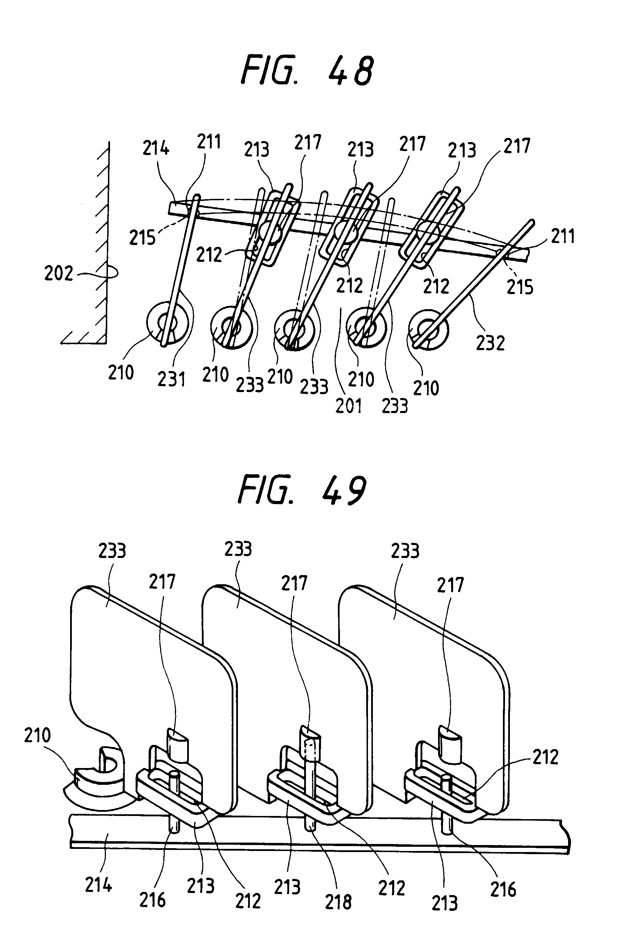

Figs. 48 and 49 are views showing another embodiment of the present invention. Fig. 48 is a cross-sectional plan view of a blow-outlet; and Fig. 49 is an enlarged perspective view of important part of Fig. 48. The other structure in Figs. 48 and 49 is the same as that in Fig. 65. In the drawings, the reference numeral 201 represents a blow-outlet (nozzle); 202, an inner wall of the blow-outlet 201; 231, a first-kind vane disposed to be near the inner wall 202 which is one side of the blow-outlet 201; and 210, a C-shaped pivotal bearing obtained by cutting one side of a ring and provided to be near one end of an edge portion on one side of the first-kind vane 231.

The reference numeral 211 represents a rotational bearing provided on the other-end side of the edge portion in which the pivotal bearing 210 of the first-kind vane 231 is provided; and 232, a second-kind vane disposed so as to be opposite to the first-kind vane 231 among one group of vanes and formed in the same manner as the first-kind vane 231 so that the second-kind vane is provided with both a pivotal bearing 210 and a rotational bearing 211 but the two bearings are arranged at a shorter distance than the distance in the first-kind vane 231.

The reference numeral 233 represents a plurality of third- kind vanes provided separately between the first-kind vane 231 and the second-kind vane 232. The third-kind vanes are formed in the same manner as the first-kind vane 231 and provided with pivotal bearings 210 provided in positions corresponding to the pivotal bearing 210 of the first-kind vane 231, each of the third-kind vanes being provided with an engagement portion 213 formed on the other-end side of an edge portion where the pivotal bearing 210 is disposed and having an elongated hole (slot) 212 along the length of the edge portion. The third-kind vanes are further provided with bearing portions 217 provided just above the elongated holes 212, respectively.

The reference numeral 214 represents a connection arm disposed along end portions opposite to the pivotal bearings 210, of the first-, second- and third-kind vanes 231, 232 and 233.

The connection arm 214 has connection shafts 215 provided at its opposite end portions so as to be pivotally held by the rotational bearings 211 of the first- and second-kind vanes 231 and 232 respectively, intermediate connection shafts 216 provided at its intermediate portion so as to be movably fitted into the elongated holes 212 of the engagement portions 213 of the third- kind vanes 233 respectively, and an intermediate joint shaft 218 inserted into the elongated hole 212 of the engagement portion 213 of the third-kind vane 233 disposed in an intermediate portion of the third-kind vanes 233 and pivotally held by the bearing portion 217 of the third-kind vane 233.

In the air-direction adjusting apparatus in the air-conditioning equipment configured as described above, the following operation is carried out in the case where two, left and right groups of vanes are disposed in the left and right respectively as shown in Fig. 66 so that the lower sides are far from each other in Fig. 66. That is, the respective end portions opposite to the pivotal bearings 210, of the first-, second- and third-kind vanes 231, 232 and 233 are engaged with the connection arm 214. Particularly the end portions of the third-kind vanes 233 are engaged with the connection arm 214 by the intermediate connection shafts 216 movably fitted into the elongated holes 212 of the engagement portions 213. Further, the third-kind vane 233 disposed in an intermediate portion of the third-kind vanes 233 is connected to the connection arm 214 by the intermediate joint shaft 218 pivotally held by the bearing portion 217 thereof. Accordingly, the first-, second- and third-kind vanes 231, 232 and 233 are moved respectively in accordance with the lengthwise movement of the connection arm 214 so as to be disposed in inclined posture in the same manner as in the case of Fig. 66.

It is therefore unnecessary that the third-kind vanes 233 are produced while the distances between the pivotal bearings 210 and the engagement portions 213 are successively changed in accordance with the positions of the arrangement of the third- kind vanes 233. Accordingly, the third-kind vanes 233 can be produced easily, so that the air-direction adjusting apparatus in the air-conditioning equipment can be assembled up by simple work.

Further, in the embodiment of Figs. 48 and 49, because the third-kind vane 233 disposed in an intermediate portion of the third-kind vanes 233 is connected to the connection arm 214 through the intermediate joint shaft 218 pivotally held by the bearing portion 217, it is possible to prevented the occurrence of the disadvantage in that the connection arm 214 is distorted by air blowing as represented by the chained line in Fig. 48 to shift the inclination angle of the third-kind vanes 233 from a predetermined value to thereby spoil the air-direction changing effect.

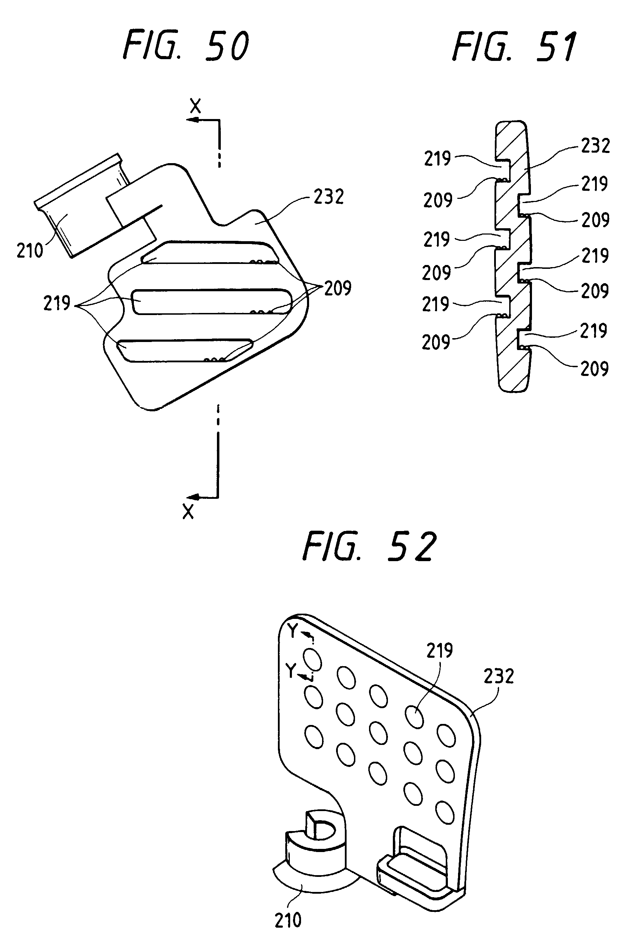

Figs. 50 and 51 are views showing a further embodiment of the present invention. Fig. 50 is a front view of a vane; and Fig. 51 is an enlarged section taken along the line X-X in Fig. 50. The other structure in Figs. 50 and 51 is the same as that in Fig. 65. In the drawings, the reference numeral 232 represents a second-kind vane disposed in the center side of the blow-outlet 201; and 210, a C-shaped pivotal bearing obtained by cutting one side of a ring and disposed in the one-end side of an edge portion which is one side of the second-kind vane 232.

The reference numeral 219 represents dew-receiving cavities provided in opposite plane portions respectively of the second- kind vane 232 and constituted by a plurality of dew-receiving horizontal grooves arranged separately in parallel to each other and each having a width of about 3 mm and a depth of about 0.5 mm; and 209, dew generated in the second-kind vane 232 and deposited onto the dew-receiving cavities 219.

In the air-direction adjusting apparatus in the air-conditioning equipment configured as described above, the following operation is carried out in the case where two, left and right groups of vanes are disposed in the left and right respectively as shown in Fig. 66 so that the lower sides are far from each other in Fig. 66. In this case, a narrow gap between second-kind vanes 232 is formed in the center portion where the two, left and right groups of vanes face to each other. For this reason, air 207 blown out through this gap as shown in Fig. 66 is weak so that secondary air 208 in the neighborhood of the air 207 is involved. As a result, dew 209 is generated in the second-kind vanes 232 and drops down. The thus generated dew 209 is, however, reserved in the dew-receiving cavities 219, so that the dropping of dew 209 can be prevented.

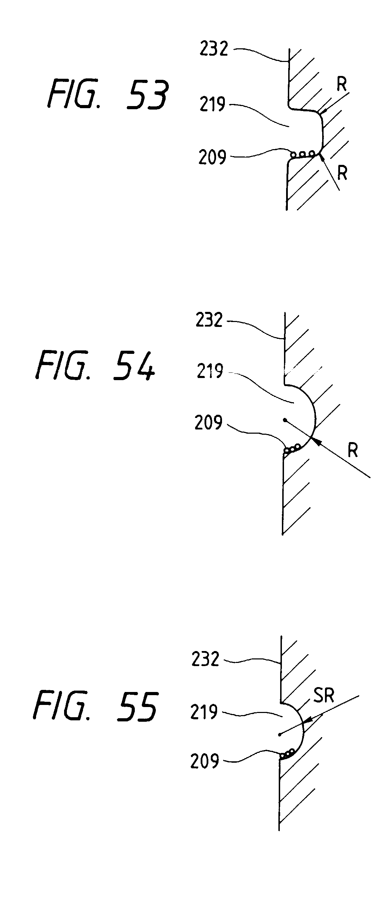

Further, by applying the embodiment shown in Figs. 50 and 51, air-direction adjusting apparatuses in an air-conditioning equipment can be configured easily as shown in Figs. 52 to 55. That is, Fig. 52 is a perspective view corresponding to Fig. 50; and Figs. 53 to 55 are views showing sections taken along the line Y-Y in Fig. 52. In the drawings, the reference numeral 219 represents dew-receiving cavities provided in opposite plane portions respectively of the second-kind vane 232 to form various kinds of cross-sectional shapes as shown in Figs. 53 to 55 and constituted by a plurality of dew-receiving concave portions arranged separately in parallel to each other; and 209, dew generated in the second-kind vane 232 and deposited onto the dew- receiving cavities 219.

Also in the structures shown in Figs. 52 to 55, dew 209 generated in the second-kind vane 232 is reserved in the dew-receiving cavities 19. Accordingly, though the detailed description is omitted, it is apparent that the same effect as in the embodiment shown in Figs. 50 and 51 can be achieved in the structures shown in Figs. 52 to 55.

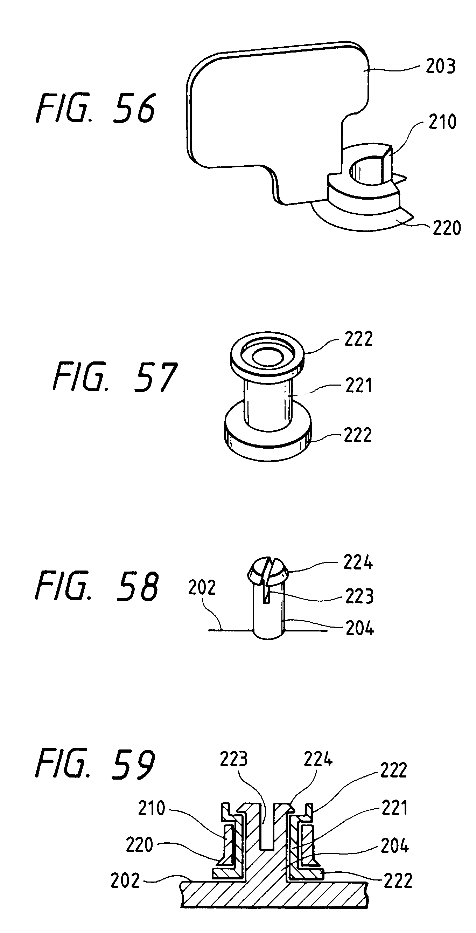

Fig. 56 is a perspective view of a vane; Fig. 57 is a perspective view of a sleeve fitted into the pivotal bearing depicted in Fig. 56; Fig. 58 is a perspective view of a shaft erected from the inner wall of the blow-outlet; and Fig. 59 is a vertical section showing the state in which the pivotal bearing of Fig. 56, the sleeve of Fig. 57 and the shaft of Fig. 58 are assembled. The other structure in Figs. 56 to 59 is the same as that in Fig. 65. In the drawings, the reference numeral 210 represents a C-shaped pivotal bearing obtained by cutting one side of a ring. The pivotal bearing 210 is provided in the one- end side of an edge portion on one side of the vane 203 and provided with a flange 220 at its lower side.

The reference numeral 221 represents a sleeve having flanges 222 at its upper and lower portions respectively and fitted into the pivotal bearing 210 so as to be held by the pivotal bearing 210; and 204, a shaft provided so as to be erected from the inner wall 202 of the blow-outlet 201 and fitted into the sleeve 221. In the upper end portion of the shaft 204, there are provided a groove 223 and a claw 224 projected to prevent the dropping-out of the sleeve 221.

In the air-direction adjusting apparatus in the air-conditioning equipment configured as described above, vanes 203 are assembled into two, left and right groups as shown in Fig. 66. The two groups of vanes are arranged so as to be rotatable so that the lower sides are far from each other. The respective vanes 203 are pivotally held, through the sleeves 221 and the pivotal bearings 210, by the shafts 204 erected from the inner wall 202 of the blow-outlet 201 as shown in Fig. 59.

For this reason, the respective vanes 203 make rotating operations smoothly with respect to the shafts 204. Further, the vanes 203 are held by the flanges 220 even in the case where loads perpendicular to the shafts 204 act on the vanes 203 respectively. Accordingly, the pivotal bearings 210 and the sleeves 221 can be assembled in advance, so that assembling can be performed easily. Further, the rotating operations of the vanes 203 at the pivotally mounted portions thereof can be smoothened. In addition, noise at the pivotally mounted portions is reduced, so that quiet environment can be provided.

## Claims

1. An air-direction adjusting apparatus in an air-conditioning equipment in which a blow-out nozzle (9;201) having an oblong section extending in a left/right direction is provided in the outlet (4) of an air course (13) formed in the inside of a body of the apparatus and in which blown air passed through the air course is blown out of the outlet (4) while guided with respect to the left/right direction by at least one set of guide vanes (8; 231-233) pivotally mounted in the blow-out nozzle (9;201) with their pivot axes parallel, the guide vanes (8; 231-233) being connected to a link (20;214) which is movable in the left/right direction to incline the guide vanes (8; 231-233), characterised by sliding connections between at least some of the guide vanes (8;233) and the link (20;214) to allow variation of the distance between the intersection of the said guide vanes (8;233) with the link (20;214) and the pivot axis of the guide vanes (8;233).

2. Apparatus as claimed in claim 1, in which there are sliding connections between all of the guide vanes (8) of the set and the link (20), and means (23,24) are provided for varying the said distance between the intersection (21) and the pivot axis (17).

3. Apparatus as claimed in claim 2, in which the said means (23,24) comprises cams (23,24) which act on opposite end portions of the link (20).

4. Apparatus as claimed in claim 3, in which the end portions of the link (20) are urged into contact with the cams (23,24).

5. Apparatus as claimed in any of claims 2 to 4, in which the sliding connection between a guide vane (8) and the link (20) comprises a longitudinal slide opening (42) in the link (20), an opening (41) in the guide vane (8) through which the link passes, and a slide member(43;44) provided in the guide vane opening (41) and extending through the slide opening (42).

6. Apparatus as claimed in any of claims 2 to 5, in which the said means (23,24) permits the link (20) to be placed in a condition in which the inclined guide vanes (8) have the same angles of inclination (θ₁).

7. Apparatus as claimed in any of claims 2 to 6, in which the said means (23,24) permits the link (20) to be placed in a condition in which the inclined guide vanes (8) have angles of inclination (θ₁ - θ₆) which become larger as the guide vanes (8) approach a left/right side of the nozzle (9).

8. Apparatus as claimed in any of claims 2 to 7, in which the said means (23,24) permits the link (20) to be placed in a condition in which the inclined guide vanes (8) have angles of inclination (θ₁ - θ₆) which become smaller as the guide vanes (8) approach a left/right side of the nozzle (9).

9. Apparatus as claimed in claim 8, in which the angles of inclination of successive guide vanes (8) differ by 3° when the average angle is 45°.

10. Apparatus as claimed in claim 8, in which the angles of inclination of successive guide vanes (8) differ by 2° when the average angle is 30°.

11. Apparatus as claimed in any of claims 2 to 10, in which the blow-out nozzle (9) has left/right side walls (52,48) which gradually diverge from each other in the downstream direction.

12. Apparatus as claimed in any preceding claim, in which there are two said sets of guide vanes (8; 231-233) and two said links (20;214).

13. Apparatus as claimed in claim 1, in which the set of guide vans (231-233) comprises a guide vane (231) of a first kind at one end, a guide vane (232) of a second kind at the other end, and guide vanes (233) of a third kind intermediate the two end guide vanes (231,232), there being non-sliding connections (211/215) between the two end guide vanes (231,232) and the link (214), the said distances between the intersections and the pivot axes being different for the two end guide vanes (231,232), each intermediate guide vane (233) having a slot (212) in which a shaft (216) on the link (214) is received to connect the guide vane (233) to the link (214).

14. Apparatus as claimed in claim 13, in which one shaft (218) on the link (214) is received in a bearing portion (217) of one of the intermediate guide vanes (233).

15. Apparatus as claimed in claim 13 or 14, in which there are two sets of guide vanes (231-233) and the end guide vanes (232) which are next to each other have a plurality of dew-receiving cavities (219) in their surfaces.

16. Apparatus as claimed in any preceding claim, in which each vane (231-233) has a C-shaped annular pivotal bearing (210) and a sleeve (221) fitted into the bearing (210) so as to be held by the bearing, a shaft (204) extending from an inner wall (202) of the blow-out nozzle (201) being inserted into the sleeve (221), the shaft (204) having claws (224) which project from the upper end portion of the shaft so as to retain the sleeve (221).

## Patentansprüche

1. Vorrichtung zur Regulierung der Richtung des Luftstroms in einer Klimaanlage, bei der eine Ausblasdüse (9; 201), die einen länglichen, in der Links-Rechts-Richtung verlaufenden Schnitt hat, in einem Auslaß (4) einer Luftbahn (13) vorhanden ist, die auf der Innenseite eines Gehäuses der Vorrichtung gebildet wird, und bei der Blasluft, die durch die Luftbahn geführt worden ist, aus dem Auslaß (4) herausgeblasen wird, während sie im Verhältnis zur Links-Rechts-Richtung durch wenigstens einen Satz von Leitflächen (8; 231 bis 233) geleitet wird, die drehbar mit parallel laufenden Drehachsen in der Ausblasdüse (9; 201) angebracht sind, wobei die Leitflächen (8; 231 bis 233) mit einem Glied (20; 214) verbunden sind, das in der Links-Rechts-Richtung beweglich ist, um die Leitflächen (8; 231 bis 233) schräg zu stellen, gekennzeichnet durch gleitende Verbindungen zwischen wenigstens einigen der Leitflächen (8; 233) und dem Glied (20; 214), um eine Veränderung des Abstands zwischen dem Schnittpunkt der genannten Leitflächen (8; 233) mit dem Glied (20; 214) und der Drehachse der Leitflächen (8; 233) zu ermöglichen.

2. Vorrichtung nach Anspruch 1, bei der gleitende Verbindungen zwischen allen den Leitflächen (8) des Satzes und dem Glied (20) vorhanden sind und Mittel (23, 24) bereitgestellt werden, um den Abstand zwischen dem Schnittpunkt (21) und der Drehachse (17) zu verändern.

3. Vorrichtung nach Anspruch 2, bei der die Mittel (23, 24) Nocken (23, 24) umfassen, die an den gegenüberliegenden Endabschnitten des Gliedes (20) wirken.

4. Vorrichtung nach Anspruch 3, bei der die Endabschnitte des Gliedes (20) zwingend mit den Nocken (23, 24) in Kontakt gebracht werden.

5. Vorrichtung nach einem der Ansprüche 2 bis 4, bei der die gleitende Verbindung zwischen einer Leitfläche (8) und dem Glied (20) eine längliche Gleitöffnung (42) in dem Glied (20), eine Öffnung (41) in der Leitfläche (8), durch die das Glied geführt wird, und ein Gleitelement (43; 44) umfaßt, das in der Leitflächen-Öffnung (41) vorhanden ist und durch die Gleitöffnung (42) führt.

6. Vorrichtung nach einem der Ansprüche 2 bis 5, bei der es das Mittel (23, 24) zuläßt, das Glied (20) in einen Zustand zu bringen, in dem die schräggestellten Leitflächen (8) denselben Neigungswinkel (θ₁) haben.

7. Vorrichtung nach einem der Ansprüche 2 bis 6, bei der es das Mittel (23, 24) zuläßt, das Glied (20) in einen Zustand zu bringen, in dem die schräggestellten Leitflächen (8) einen Neigungswinkel (θ₁ bis θ₆) haben, der größer wird, wenn sich die Leitflächen (8) an die linke/rechte Seite der Düse (9) annähern.

8. Vorrichtung nach einem der Ansprüche 2 bis 7, bei der es das Mittel (23, 24) zuläßt, das Glied (20) in einen Zustand zu bringen, in dem die schräggestellten Leitflächen (8) einen Neigungswinkel (θ₁bis θ₆) haben, der kleiner wird, wenn sich die Leitflächen (8) an die linke/rechte Seite der Düse (9) annähern.

9. Vorrichtung nach Anspruch 8, bei der die Neigungswinkel von aufeinanderfolgenden Leitflächen (8) um 3° differieren, wenn der durchschnittliche Winkel gleich 45° ist.

10. Vorrichtung nach Anspruch 8, bei der die Neigungswinkel von aufeinanderfolgenden Leitflächen (8) um 2° differieren, wenn der durchschnittliche Winkel gleich 30° ist.

11. Vorrichtung nach einem der Ansprüche 2 bis 10, bei der die Ausblasdüse (9) linke/rechte Seitenwände (52, 48) hat, die in der Strömungsrichtung allmählich auseinander laufen.

12. Vorrichtung nach einem der vorhergehenden Ansprüche, bei der zwei der genannten Sätze von Leitflächen (8; 231 bis 233) und zwei der Glieder (20; 214) vorhanden sind.

13. Vorrichtung nach Anspruch 1, bei welcher der Satz von Leitflächen (231 bis 233) an einem Ende eine Leitfläche (231) einer ersten Art, am anderen Ende eine Leitfläche (232) einer zweiten Art und Leitflächen (233) einer dritten Art zwischen den beiden End-Leitflächen (231, 232) umfaßt, wobei zwischen den beiden End-Leitflächen (231, 232) und dem Glied (214) nicht-gleitende Verbindungen (211/215) vorhanden sind, wobei der Abstand zwischen den Schnittpunkten und den Drehachsen für die beiden End-Leitflächen (231, 232) unterschiedlich ist, wobei jede der dazwischenliegenden Leitflächen (233) einen Schlitz (212) hat, in dem eine Welle (216) auf dem Glied (214) aufgenommen wird, um die Leitfläche (233) mit dem Glied (214) zu verbinden.

14. Vorrichtung nach Anspruch 13, bei der eine Welle (218) auf dem Glied (214) in einem Lagerabschnitt (217) einer der dazwischenliegenden Leitflächen (233) aufgenommen wird.

15. Vorrichtung nach Anspruch 13 oder 14, bei der zwei Sätze der Leitflächen (231 bis 233) vorhanden sind und die End-Leitflächen (232), die nebeneinander liegen, in ihrer Oberfläche eine Vielzahl von tauaufnehmenden Aushöhlungen (219) haben.

16. Vorrichtung nach einem der vorhergehenden Ansprüche, bei der jede Leitfläche (231 bis 233) ein C-förmiges Ring-Drehlager (210) und eine Buchse (221) hat, die so in das Lager (210) eingepaßt ist, daß sie durch das Lager gehalten wird, wobei eine Welle (204), die von einer Innenwand (202) der Ausblasdüse (201) ausgeht, in die Buchse (221) eingeführt wird, wobei die Welle (204) Klauen (224) hat, die vom oberen Endabschnitt der Welle vorstehen, um so die Buchse (221) zu halten.

## Revendications

1. Dispositif d'ajustement de la direction de soufflage d'air dans un équipement de climatisation, dans lequel une buse de décharge (9; 201), comportant une section oblongue s'étendant dans une direction gauche/droite est agencée dans la sortie (4) d'un trajet d'air (13), formé à l'intérieur d'un corps du dispositif, dans lequel l'air de soufflage transféré à travers le trajet d'air est soufflé vers l'extérieur de la sortie (4), tout en étant guidé par rapport à la direction gauche/droite par au moins un groupe de pales de guidage (8; 231-233), montées par pivotement dans la buse de décharge (9; 201), leurs axes de pivotement étant parallèles, les pales de guidage (8; 231-233) étant connectées à un organe de liaison (20; 214) pouvant être déplacé dans la direction gauche/droite pour incliner les pales de guidage (8; 231-233), caractérisé par des connexions coulissantes entre au moins certaines des pales de guidage (8; 233) et l'organe de liaison (20; 214), pour permettre la variation de la distance entre l'intersection desdites pales de guidage (8; 233) avec l'organe de liaison (20; 214) et l'axe de pivotement des pales de guidage (8; 233).

2. Dispositif selon la revendication 1, dans lequel des connexions coulissantes sont agencées entre toutes les pales de guidage (8) du groupe et l'organe de liaison (20), des moyens (23, 24) étant prévus pour varier ladite distance entre l'intersection (21) et l'axe de pivotement (17).

3. Dispositif selon la revendication 2, dans lequel ledit moyen (23, 24) comprend des cames (23, 24) agissant sur les parties d'extrémité opposées de l'organe de liaison (20).

4. Dispositif selon la revendication 3, dans lequel les parties d'extrémité de l'organe de liaison (20) sont poussées en contact avec les cames (23, 24).

5. Dispositif selon l'une quelconque des revendications 2 à 4, dans lequel la connexion coulissante entre une pale de guidage (8) et l'organe de liaison (20) comprend une ouverture coulissante longitudinale (42) dans l'organe de liaison (20), une ouverture (41) dans la pale de guidage (8), à travers laquelle passe l'organe de liaison, et un élément coulissant (43; 44), agencé dans l'ouverture de la pale de guidage (41) et s'étendant à travers l'ouverture coulissante (42).

6. Dispositif selon l'une quelconque des revendications 2 à 5, dans lequel ledit moyen (23, 24) permet le positionnement de l'organe de liaison (20) dans un état dans lequel les pales de guidage inclinées (8) ont les mêmes angles d'inclinaison (θ₁).

7. Dispositif selon l'une quelconque des revendications 2 à 6, dans lequel ledit moyen (23, 24) permet le positionnement de l'organe de liaison (20) dans un état dans lequel les pales de guidage inclinées (8) ont des angles d'inclinaison (θ₁ - θ₆) qui sont accrus lors de l'approche des pales de guidage (8) du côté gauche/droit de la buse (9).

8. Dispositif selon l'une quelconque des revendications 2 à 7, dans lequel ledit moyen (23, 24) permet le positionnement de l'organe de liaison (20) dans un état dans lequel les pales de guidage inclinées (8) ont des angles d'inclinaison (θ₁ - θ₆) qui sont réduits lors de l'approche des pales de guidage (8) du côté gauche/droit de la buse (9).

9. Dispositif selon la revendication 8, dans lequel les angles d'inclinaison des pales de guidage successives (8) différent de 3° lorsque l'angle moyen correspond à 45°.

10. Dispositif selon la revendication 8, dans lequel les angles d'inclinaison des pales de guidage successives (8) différent de 2° lorsque l'angle moyen correspond à 30°.

11. Dispositif selon l'une quelconque des revendications 2 à 10, dans lequel la buse de décharge (9) comporte des parois latérales gauche/droite (52, 48), divergeant progressivement l'une de l'autre dans la direction allant vers l'aval.

12. Dispositif selon l'une quelconque des revendications précédentes, comportant deux desdits groupes de pales de guidage (8; 231-233) et deux desdits organes de liaison (20; 214).

13. Dispositif selon la revendication 1, dans lequel le groupe de pales de guidage (231-233) comprend une pale de guidage (231) d'un premier type au niveau d'une extrémité, une pale de guidage (232) d'un deuxième type au niveau de l'autre extrémité, et des pales de guidage (233) d'un troisième type entre les deux pales de guidage d'extrémité (231, 232), des connexions non coulissantes (211/215) étant agencées entre les deux pales de guidage d'extrémité (231, 232) et l'organe de liaison (214), ladite distance entre les intersections et les axes de pivotement étant différente pour les deux pales de guidage d'extrémité (231, 232), chaque pale de guidage intermédiaire (233) comportant une fente (212) dans laquelle est reçu un arbre (216) sur l'organe de liaison (214), pour connecter la pale de guidage (233) à l'organe de liaison (214).

14. Dispositif selon la revendication 13, dans lequel un arbre (218) sur l'organe de liaison (214) est reçu dans une partie de palier (217) de l'une des pales de guidage intermédiaires (233).

15. Dispositif selon les revendications 13 ou 14, comportant deux groupes de pales de guidage (231-233), les pales de guidage d'extrémité (232) adjacentes les unes aux autres comportant plusieurs cavités de réception de rosée (219) dans leurs surfaces.

16. Dispositif selon l'une quelconque des revendications précédentes, dans lequel chaque pale (231-233) comporte un palier de pivotement annulaire en C (210) et un manchon (221) ajusté dans le palier (210), de sorte à être retenu par le palier, un arbre (204), s'étendant à partir d'une paroi interne (202) de la buse de décharge (201), étant inséré dans le manchon (221), l'arbre (204) comportant des griffes (224) débordant de la partie d'extrémité supérieure de l'arbre, de sorte à retenir le manchon (221).
